# EUROPEAN PATENT SPECIFICATION

(11) **EP 4 362 187 B1**
(45) Date of publication and mention of the grant of the patent: **21.10.2026**
(21) Application number: 22919400.6
(22) Date of filing: 12.01.2022
(51) Int. Cl.: H01M 50/209, H01M 50/342, H01M 10/6554, H01M 10/613, H01M 50/249, H01M 10/0525

(54) **BATTERY, POWER CONSUMING APPARATUS, AND METHOD AND APPARATUS FOR PREPARING BATTERY**
BATTERIE, STROMVERBRAUCHENDE VORRICHTUNG SOWIE VERFAHREN UND VORRICHTUNG ZUR HERSTELLUNG DER BATTERIE
BATTERIE, APPAREIL CONSOMMANT DE L'ÉNERGIE ET PROCÉDÉ ET APPAREIL DE PRÉPARATION DE BATTERIE

(43) Date of publication of application: 01.05.2024
(73) Proprietor: Contemporary Amperex Technology (Hong Kong) Limited, Central, Central And Western District (HK)
(72) Inventor: YAO, Pengcheng, Ningde, Fujian 352100 (CN); GU, Mingguang, Ningde, Fujian 352100 (CN); LI, Yao, Ningde, Fujian 352100 (CN); LI, Bingfeng, Ningde, Fujian 352100 (CN); LU, Zequan, Ningde, Fujian 352100 (CN)
(74) Representative: Rowlands, Stuart Michael
(86) International application number: PCT/CN2022/071661
(87) International publication number: WO 2023/133735

(56) References cited:
- WO-A1-2012/133710
- WO-A1-2012/147150
- CN-A- 112 086 605
- CN-U- 209 401 662
- CN-U- 213 026 307
- CN-U- 213 026 307
- CN-U- 213 026 308
- CN-U- 213 601 965
- CN-U- 213 782 158
- CN-U- 214 898 695
- DE-A1- 102019 128 794
- JP-A- 2003 100 274
- US-A1- 2021 296 625

## Description

### TECHNICAL FIELD

This application relates to the field of battery technology, and in particular, to a battery, an electrical device, and a method and equipment for manufacturing a battery.

### BACKGROUND

Energy conservation and emission reduction are key to sustainable development of the automobile industry. As such, electric vehicles have become an important part of the sustainable development of the automobile industry by virtue of saving energy and being environmentally friendly. Battery technology is crucial to development of electric vehicles.

In the development of battery technology, in addition to improvement of electrical performance of batteries, safety is an issue that cannot be ignored. If the safety of a battery is not guaranteed, the battery is not suitable for use. Therefore, how to enhance the safety of the battery is an urgent technical issue in the battery technology.

JP 2003 100274 A discloses a power supply device capable of preventing gas generated from a battery from leaking to the outside and suppressing a rise in cost.

CN 213 026 307 U discloses a battery cell that includes a pressure relief mechanism configured to actuate to relieve the internal pressure when an internal pressure or temperature of the battery cell reaches a threshold; an attachment member adapted to be attached to the battery cell by an adhesive; and a spacer member configured to prevent the adhesive from being applied to the attachment member and the leakage between the pressure mechanisms.

US 2021/296625 A1 discloses a safety structure of a battery module which includes: a guiding channel, one end of the guiding channel connects to the safety valve of the battery cell, and the other end of the guiding channel connects to the packaging housing of the battery module.

CN 213 878 331 U discloses a module exhaust structure and a device, which comprises two sets of module exhaust structures, wherein the two sets of module exhaust structures are arranged in a bilaterally symmetrical manner, and each module exhaust structure comprises a heat insulation plate, an insulation film and at least two heat insulation sleeves.

WO 2012/147150 A1 discloses a plurality of single cells having a gas discharge valve provided on the container surface; a duct device connected to each of the respective gas discharge valves of the single cells, and a gas emission channel being formed inside the duct device.

CN 209 401 662 U discloses a battery pack which includes: a battery module, the battery module includes a plurality of single cells, the single cells include an explosion-proof valve, the explosion-proof valve is arranged on the bottom surface of one side of the single battery in the height direction, and the explosion-proof valve protrudes from the bottom surface.

DE 10 2019 128794 A1 discloses an electrical energy store of an at least partially electrically operated motor vehicle, with a battery cell housing with an interior in which at least one battery winding of the electrochemical battery cell is arranged.

### SUMMARY

This application provides a battery, an electrical device, and a method and equipment for manufacturing a battery to enhance the battery safety. The subject matter of the present invention is defined in the appended claims.

According to a first aspect, a battery is provided. The battery includes: a battery cell, including a pressure relief mechanism, where the pressure relief mechanism is disposed on a first wall of the battery cell, and the pressure relief mechanism is configured to be actuated to relieve an internal pressure when the internal pressure or an internal temperature of the battery cell reaches a threshold; an attachment component, where a first surface of the attachment component is attached to the first wall, a first through-hole located corresponding to the pressure relief mechanism is created in the attachment component, and the first through-hole is configured to make emissions from the battery cell pass through the attachment component upon actuation of the pressure relief mechanism; and an insulation component, where at least a part of the insulation component abuts and covers an inner wall of the first through-hole to dielectrically protect the inner wall of the first through-hole.

Based on the technical solution of an embodiment of this application, a first through-hole is created in the attachment component. At least a part of the insulation component abuts and covers the inner wall of the first through-hole. In this way, the inner wall of the first through-hole can be dielectrically protected, thereby improving the insulativity of the attachment component, and preventing a short circuit caused by direct contact between the battery cell and the inner wall of the first through-hole, and in turn, reducing safety hazards and enhancing battery safety. In addition, the first surface of the attachment component is attached to the first wall equipped with a pressure relief mechanism. When the pressure relief mechanism is actuated, the emissions of the battery cell are expelled toward the first through-hole. The emissions can be quickly expelled away from the battery cell after passing through the attachment component through the first through-hole, thereby reducing the degree of danger of the emissions and enhancing battery safety.

In some possible implementations, a first groove is created in the insulation component. A sidewall of the first groove is embedded in the first through-hole. An outer margin of the first groove is attached to the first surface.

In this way, in a practical mounting process, the insulation component equipped with the first groove can be directly embedded in the first through-hole created in the attachment component, thereby not only covering the inner wall of the first through-hole to dielectrically protect the inner wall of the first through-hole, but also fixing the insulation component to the attachment component conveniently and stably and enhancing the assembling efficiency of the battery.

In some possible implementations, a second through-hole is created in a bottom wall of the first groove. The second through-hole is configured to make the emissions from the battery cell pass through the insulation component upon actuation of the pressure relief mechanism.

Therefore, when the pressure relief mechanism is actuated, the emissions of the battery cell can be quickly expelled away from the battery cell through the second through-hole, thereby reducing the degree of danger of the emissions and enhancing the battery safety.

In some possible implementations, a bottom wall of the first groove is configured to block the first through-hole. The bottom wall of the first groove is configured to be broken by the emissions when the pressure relief mechanism is actuated, so as to let the emissions pass through the insulation component.

In this way, when the pressure relief mechanism is not actuated, the bottom wall of the first groove may block the first through-hole, so as to prevent the pressure relief performance of the pressure relief mechanism from being impaired by foreign matters that enter the space in which the pressure relief mechanism is located. When the pressure relief mechanism is actuated, the bottom wall of the first groove can be easily broken by the emissions to smoothly expel the emissions out of the battery cell through the insulation component.

In some possible implementations, a fragile region is disposed on the bottom wall of the first groove. The fragile region is configured to be broken by the emissions when the pressure relief mechanism is actuated, so as to let the emissions pass through the fragile region.

With the provision of the fragile region, the bottom wall of the first groove can be more easily broken by the emissions of the battery cell to facilitate rapid pressure relief for the battery cell.

In some possible implementations, the fragile region satisfies at least one of the following conditions: a melting point of the fragile region is lower than a melting point of a remaining part of the insulation component; a thickness of the fragile region is less than a thickness of the remaining part of the insulation component; and a nick is created in the fragile region.

The fragile region may be arranged in various manners so as to be easily broken by the emissions. In this way, when the pressure relief mechanism is actuated, the fragile region is more easily breakable by the emissions than the remaining part of the bottom wall of the first groove.

In some possible implementations, the attachment component is configured to be attached to the first wall through a binder. The insulation component is configured to prevent the binder from being applied between the attachment component and the pressure relief mechanism.

The insulation component not only dielectrically protects the inner wall of the first through-hole created in the attachment component, but also effectively prevents, during battery production, the binder from being applied between the attachment component and the pressure relief mechanism, and avoids the resultant disruption or impairment of the actuation performance of the pressure relief mechanism.

In some possible implementations, the pressure relief mechanism includes an actuation region. The pressure relief mechanism is configured to form an exhaust passage in the actuation region when the internal pressure or internal temperature of the battery cell reaches the threshold, where the exhaust passage is configured to relieve the internal pressure. The outer margin of the first groove is configured to surround at least the actuation region to prevent the binder from entering the actuation region.

The outer margin of the first groove surrounds at least the actuation region, thereby preventing the binder from flowing into the actuation region from any direction and from causing any hindrance or adverse effect onto the action of actuation of the pressure relief mechanism. Therefore, such arrangement more reliably prevents the binder from interfering with the normal actuation of the pressure relief mechanism, and prevents the binder from flowing in to block the exhaust passage and thereby obstruct the expulsion of emissions of the battery cell, and in turn, further improves safety performance of the battery.

In some possible implementations, a protruding portion is disposed on the outer margin of the first groove. The protruding portion is configured to protrude beyond the first surface and is disposed around the pressure relief mechanism. The protruding portion is configured to prevent the binder from being applied between the attachment component and the pressure relief mechanism.

Such arrangement prevents, in a simple and effective manner during battery production, the binder from being applied onto the surface of the pressure relief mechanism, and prevents the binder from hindering the actuation of the pressure relief mechanism.

In some possible implementations, the protruding portion includes a flange structure formed by bending the outer margin of the first groove.

By making the edge of the insulation component into a flange structure, the processing and formation of the insulation component are facilitated. Moreover, the flange structure prevents, in a simple and effective manner during battery production, the binder from being applied onto the surface of the pressure relief mechanism.

In some possible implementations, a maximum height of the protruding portion from the first surface is set to be greater than or equal to a preset height by which the binder is to be applied. The protruding portion is compressed to the same height as the binder when the battery cell is attached to the attachment component.

Such arrangement ensures that the protruding portion effectively prevents the binder from being applied between the attachment component and the pressure relief mechanism, and prevents the insulation component from interfering with the reliable adhesion between the attachment component and the pressure relief mechanism and from interfering with the actuation of the pressure relief mechanism.

In some possible implementations, a second groove disposed opposite to the pressure relief mechanism is created in the attachment component. The first through-hole is created in a bottom wall of the second groove. The outer margin of the first groove includes a first attachment wall connected to the sidewall of the first groove. The first attachment wall is attached to the bottom wall of the second groove.

In this embodiment of this application, by creating the second groove opposite to the pressure relief mechanism in the attachment component, a cushion space is provided for the emissions of the battery cell, thereby reducing the impact pressure exerted by the emissions of the battery cell onto an external structure or component, and further improving the safety performance of the battery.

In some possible implementations, the attachment component includes a first heat transfer plate and a second heat transfer plate. The first heat transfer plate is located between the first wall and the second heat transfer plate and attached to the first wall. A first region of the first heat transfer plate is recessed toward the second heat transfer plate to form the second groove. The first region is connected to the second heat transfer plate. The first through-hole is created in the first region. The outer margin of the first groove further includes a second attachment wall and a connection wall. The second attachment wall is connected to the first attachment wall by the connection wall. The first attachment wall is attached to the first region. The second attachment wall is attached to a second region of the first heat transfer plate. The second region is configured to be attached to the first wall.

In some possible implementations, a clearance is arranged between the connection wall and a sidewall of the second groove; or, the connection wall abuts and covers a sidewall of the second groove.

In some possible implementations, the insulation component is configured to provide a space that allows actuation of the pressure relief mechanism. An avoidance cavity is formed between the insulation component and the pressure relief mechanism.

The avoidance cavity provides a deformation space for the pressure relief mechanism, and allows the pressure relief mechanism to deform and rupture toward the attachment component.

In some possible implementations, the inner wall of the first through-hole is coated with an insulation material.

The insulation material and the insulation component form double-layer insulation for the inner wall of the first through-hole, thereby further improving the insulativity of the attachment component.

In some possible implementations, the attachment component is a thermal management component. The thermal management component is configured to accommodate a fluid to regulate temperature for the battery cell.

According to a second aspect, an electrical device is provided. The electrical device includes the battery according to the first aspect or any one possible implementation of the first aspect. The battery is configured to provide electrical energy for the electrical device.

According to a third aspect, a method for manufacturing a battery is provided. The method includes: providing a battery cell, where the battery cell includes a pressure relief mechanism, the pressure relief mechanism is disposed on a first wall of the battery cell, and the pressure relief mechanism is configured to be actuated to relieve an internal pressure when the internal pressure or an internal temperature of the battery cell reaches a threshold; providing an attachment component, where a first surface of the attachment component is attached to the first wall, a first through-hole located corresponding to the pressure relief mechanism is created in the attachment component, and the first through-hole is configured to make emissions from the battery cell pass through the attachment component upon actuation of the pressure relief mechanism; providing an insulation component; and making at least a part of the insulation component abut and cover an inner wall of the first through-hole to dielectrically protect the inner wall of the first through-hole.

According to a fourth aspect, an apparatus for manufacturing a battery is provided. The manufacturing equipment includes: a providing module, configured to: provide a battery cell, where the battery cell includes a pressure relief mechanism, the pressure relief mechanism is disposed on a first wall of the battery cell, and the pressure relief mechanism is configured to be actuated to relieve an internal pressure when the internal pressure or an internal temperature of the battery cell reaches a threshold; provide an attachment component, where a first surface of the attachment component is attached to the first wall, a first through-hole located corresponding to the pressure relief mechanism is created in the attachment component, and the first through-hole is configured to make emissions from the battery cell pass through the attachment component upon actuation of the pressure relief mechanism; and provide an insulation component; and a mounting module, configured to: make at least a part of the insulation component abut and cover an inner wall of the first through-hole to dielectrically protect the inner wall of the first through-hole.

### BRIEF DESCRIPTION OF DRAWINGS

To describe the technical solutions of the embodiments of this application more clearly, the following outlines the drawings used in the embodiments of this application. It will be apparent that the drawings outlined below are merely a part of embodiments of this application. A person of ordinary skill in the art may derive other drawings from the outlined drawings without making any creative efforts.
FIG. 1 is a schematic structural diagram of a vehicle according to an embodiment of this application;
FIG. 2 is a schematic exploded view of a battery according to an embodiment of this application;
FIG. 3 to FIG. 4 are schematic structural diagrams of a battery cell according to an embodiment of this application;
FIG. 5 is a schematic structural diagram and a close-up view of a battery according to an embodiment of this application;
FIG. 6 to FIG. 12 are schematic diagrams of a partial structure of a battery according to another embodiment of this application;
FIG. 13 to FIG. 15 are schematic structural diagrams of a battery according to still another embodiment of this application;
FIG. 16 to FIG. 17 are schematic structural diagrams of an insulation component according to an embodiment of this application;
FIG. 18 is a schematic exploded view of a battery according to an embodiment of this application;
FIG. 19 is a schematic flowchart of a method for manufacturing a battery according to an embodiment of this application; and
FIG. 20 is a schematic block diagram of equipment for manufacturing a battery according to an embodiment of this application.

The drawings are not drawn to scale.

List of reference numerals:
1-vehicle; 10-battery; 11-box; 111-first part; 112-second part; 13-attachment component; 13a-first surface; 101-first through-hole; 13b-inner wall of the first through-hole; 13c-second groove; 131-first heat transfer plate; 132-second heat transfer plate; 133-flow channel; 131a-first region; 131b-second region; 14-insulation component; 102-first groove; 141-outer margin of the first groove; 141a-protruding portion; 141b-flange structure; 142-sidewall of the first groove; 143-bottom wall of the first groove; 144-first attachment wall; 145-second attachment wall; 146-connection wall; 103-second through-hole; 104-fragile region; 105-groove; 15-binder; 115-protection component; 20-battery cell; 21-battery case; 211-housing; 212-cover plate; 213-pressure relief mechanism; 214-electrode terminal; 214a-positive electrode terminal; 214b-negative electrode terminal; 215-first wall; 22-electrode assembly; 22a-first tab; 22b-second tab; 23-connection component; 24-backing plate; 30-controller; and 40-motor.

### DETAILED DESCRIPTION OF EMBODIMENTS

The following gives a more detailed description of implementations of this application with reference to drawings and embodiments. The detailed description of the following embodiments and drawings are intended to describe the principles of this application illustratively, but not to limit the scope of this application. Therefore, this application is not limited to the described embodiments.

In the description of this application, unless otherwise specified, "a plurality of" means at least two in number (including two); the terms such as "up", "down", "left", "right", "in", and "out" indicating a direction or a position relationship are merely intended for ease or brevity of description of this application, but do not indicate or imply that the mentioned apparatus or component is necessarily located in the specified direction or constructed or operated in the specified direction. Therefore, such terms are not to be understood as a limitation on this application. In addition, the terms "first", "second", "third", and so on are merely used for descriptive purposes, but not construed as indicating or implying relative importance. "Perpendicular" does not means exact perpendicularity, but means perpendicularity falling within an error tolerance range. "Parallel" does not mean exact parallelism, but means parallelism falling within an error tolerance range.

The directional terms appearing in the following description indicate the directions shown in the drawings, but are not intended to limit specific structures in this application. In the description of this application, unless otherwise expressly specified, the terms "mount", "concatenate", and "connect" are understood in a broad sense. For example, a "connection" may be a fixed connection, a detachable connection, or an integrated connection, and may be a direct connection or an indirect connection implemented through an intermediary. A person of ordinary skill in the art can understand the specific meanings of the terms in this application according to specific situations.

In this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that an embodiment described in this application may be combined with another embodiment.

In this application, a battery means a physical module that includes one or more battery cells to provide electrical energy. For example, the battery mentioned in this application may include a battery module, a battery pack, or the like. A battery typically includes a box configured to package one or more battery cells. The box prevents liquid or other foreign matters from affecting the charging or discharging of the battery cells.

Optionally, a battery cell may include a lithium-ion secondary battery, a lithium-ion primary battery, a lithium-sulfur battery, a sodium-lithium-ion battery, a sodium-ion battery, a magnesium-ion battery, or the like, without being limited in embodiments of this application. In some embodiments, a battery cell is briefly referred to as a cell.

A battery cell includes an electrode assembly and an electrolytic solution. The electrode assembly includes a positive electrode plate, a negative electrode plate, and a separator. The battery cell works primarily by relying on shuttling of metal ions between the positive electrode plate and the negative electrode plate. The positive electrode plate includes a positive current collector and a positive active material layer. A surface of the positive current collector is coated with the positive active material layer. Of the positive current collector, a part uncoated with the positive active material layer protrudes from a part coated with the positive active material layer. The part, uncoated with the positive active material layer, of the positive current collector, serves as a positive tab. Using a lithium-ion battery as an example, the positive current collector may be made of aluminum, and a positive active material may be lithium cobalt oxide, lithium iron phosphate, ternary lithium, lithium manganese oxide, or the like. The negative electrode plate includes a negative current collector and a negative active material layer. A surface of the negative current collector is coated with the negative active material layer. Of the negative current collector, a part uncoated with the negative active material layer protrudes from a part coated with the negative active material layer, and the part uncoated with the negative active material layer serves as a negative tab. The negative current collector may be made of copper, and a negative active material may be carbon, silicon, or the like. In order to ensure passage of a large current without fusing off, the positive tab is plural in number, and the plurality of positive tabs are stacked together; the negative tab is plural in number, and the plurality of negative tabs are stacked together. The separator may be made of a material such as polypropylene (PP) or polyethylene (PE). In addition, the electrode assembly may be of a jelly-roll type structure or a stacked type structure, without being limited herein.

A box of a battery in an embodiment of this application is configured to accommodate a plurality of battery cells, a busbar component, and other components of the battery such as a thermal management component. In some embodiments, a structure configured to fix the battery cell may be further disposed in the box. The shape of the box may depend on the shape of the plurality of battery cells to be accommodated in the box. In some embodiments, the box may be in a quadrangular shape with six walls.

The busbar component referred to herein is configured to implement electrical connection between the plurality of battery cells, such as parallel connection, series connection, or series-parallel connection. The busbar component may implement electrical connection between the battery cells by connecting electrode terminals of the battery cells. In some embodiments, the busbar component may be fixed to the electrode terminals of the battery cell by welding. The busbar component transmits the voltage of the battery cell. A plurality of battery cells are connected in series to obtain a higher voltage. Correspondingly, an electrical connection formed by the busbar component may be referred to as a "high-voltage connection".

The thermal management component mentioned herein is configured to accommodate a fluid to regulate temperature for the plurality of battery cells. The fluid here may be a liquid or gas, and the temperature regulation means heating or cooling the plurality of battery cells. In a case of cooling down or lowering the temperature of the battery cells, the thermal management component is configured to accommodate the cooling fluid to lower the temperature of the plurality of battery cells. In this case, the thermal management component is also referred to as a cooling component, a cooling system, a cooling plate, or the like. The fluid accommodated in the thermal management component is also referred to as a cooling medium or a cooling fluid, and more specifically, referred to as a cooling liquid or a cooling gas. In addition, the thermal management component is further configured to heat up and raise the temperature of the plurality of battery cells. The use of the thermal management component is not limited herein. Optionally, the fluid may circulate in order to achieve a better effect of temperature regulation. Optionally, the fluid may be water, a mixture of water and ethylene glycol, air, or the like.

In some battery packaging technologies, a plurality of battery cells may be integrated to form a battery module first, and then the battery module is mounted in a battery box to form a battery pack. In some other battery packaging technologies, a plurality of battery cells are directly mounted in the battery box to form a battery pack. This battery packaging technology is also known as a cell-to-pack (CTP) packaging technology. In the CTP packaging technology, the battery module, which is an intermediate mode of the battery, is omitted. Therefore, the mass of the battery pack is reduced, and the energy density of the battery is increased. In other words, in a process of packaging the battery, a plurality of battery cells may directly form a battery, or, a plurality of battery cells form a battery module first and then one or more battery modules form a battery. The battery is further mounted in the electrical device to provide electrical energy for the electrical device.

The development of the battery technology needs to allow for a plurality of design factors, including performance parameters such as energy density, cycle life, discharge capacity, charge rate, and discharge rate, and also needs to ensure safety of the battery.

For a battery cell, main safety hazards come from a charging process and a discharging process. In addition, an appropriate ambient temperature needs to be designed. To effectively avoid unnecessary losses, the battery cell is generally protected by at least three protective measures. Specifically, the protective measures include at least a switch element, an appropriate separator material selected, and a pressure relief mechanism. The switch element is an element that, when a temperature or resistance in the battery cell reaches a given threshold, causes the battery to stop charging or discharging. The separator is configured to separate the positive electrode plate from the negative electrode plate, and, when the temperature rises to a given value, automatically melt micron-scale (or even nanoscale) micropores attached to the separator, so as to prevent metal ions from passing through the separator and terminate internal reactions of the battery cell.

The pressure relief mechanism disposed on the battery cell means an element or component that is actuated to relieve an internal pressure or temperature when the internal pressure or temperature of a battery cell reaches a preset threshold. The threshold varies depending on design requirements. The threshold may depend on the material of one or more of the positive electrode plate, the negative electrode plate, the electrolytic solution, or the separator in the battery cell. The pressure relief mechanism disposed on the battery cell may be in the form of an explosion-proof valve, a gas valve, a pressure relief valve, a safety valve, or the like, and may specifically adopt a pressure-sensitive or temperature-sensitive element or structure. To be specific, when the internal pressure or temperature of the battery cell reaches a preset threshold, the pressure relief mechanism performs an action or a fragile structure disposed in the pressure relief mechanism is ruptured to form an opening or channel for relieving the internal pressure or temperature.

The pressure relief mechanism on a battery cell plays an important role in battery safety. For example, in a case of a short circuit, overcharge, or the like, thermal runaway may occur inside the battery cell, resulting in a surge in pressure or temperature. In this case, the internal pressure and heat can be released outward by actuating the pressure relief mechanism, thereby preventing explosion and fire of the battery cell.

The term "actuated" mentioned in this application means that the pressure relief mechanism performs an action or is activated to a given state so that the internal pressure and temperature of the battery cell is relieved. The actions performed by the pressure relief mechanism may include, but without being limited to, rupturing, shattering, tearing, or bursting open at least a part of the pressure relief mechanism, or the like. When the pressure relief mechanism is actuated, high-temperature and high-pressure substances inside the battery cell are expelled as emissions out of the actuated position. In this way, the pressure of the battery cell is relieved under a circumstance of a controllable pressure or temperature to avoid potential severer accidents.

The emissions out of the battery cell mentioned in this application include but are not limited to: electrolytic solution, melted or split positive and negative electrode plates, fragments of the separator, reaction-induced high-temperature and high-pressure gases, flames, and the like.

A shell of the battery cell is generally made of a metal material such as aluminum and steel. If the insulation design inside the battery is inferior, for example, if the design makes a conductor around a battery cell prone to directly contact the shell of the battery cell, the battery cell is put at risk of a short circuit. The short circuit may result in thermal runaway that gives rise to a surge in pressure or temperature inside the battery cell, thereby causing safety problems such as explosion and fire of the battery cell.

In a current insulation design scheme, the insulation is usually implemented between a conductor around the battery cell and the battery cell by applying an insulation material to the surface of the conductor. However, in practical applications, according to design requirements, a hole is created on some conductor components. The current insulation design does not consider dielectric protection for an inner wall of the hole. The battery is mounted in an electrical device such as a vehicle. The movement of the electrical device such as a vehicle causes some impact on the battery. To make full use of the space inside the battery, the internal design of the battery needs to be compact and the distance between components needs to be very small. The impact caused by the electrical device onto the battery may lead to contact between the inner wall of the uninsulated hole on the conductor and the shell of the battery cell, and result in a short circuit of the battery, thereby posing a safety hazard.

In view of this, this application provides a technical solution, in which a first through-hole created in an attachment component attached to the battery cell is dielectrically protected by means of an insulation component to enhance the battery safety. More specifically, at least a part of the insulation component is caused to abut and cover the inner wall of the first through-hole to dielectrically protect the inner wall of the first through-hole. In this way, the insulativity of the attachment component is improved, and a short circuit caused by direct contact between the battery cell and the inner wall of the first through-hole is prevented, thereby reducing the safety hazards and enhancing the battery safety.

All technical solutions described in the embodiments of this application are applicable to various battery-powered devices such as a mobile phone, a portable device, a laptop computer, an electric power cart, an electrical toy, an electric tool, an electric vehicle, a ship, and a spacecraft. The spacecraft includes an airplane, a rocket, a space shuttle, a spaceship, and the like.

Understandably, the technical solutions described in the embodiments of this application are not only applicable to the devices described above, but also applicable to all battery-powered devices. However, for brevity, the following embodiments are described by using an electric vehicle as an example.

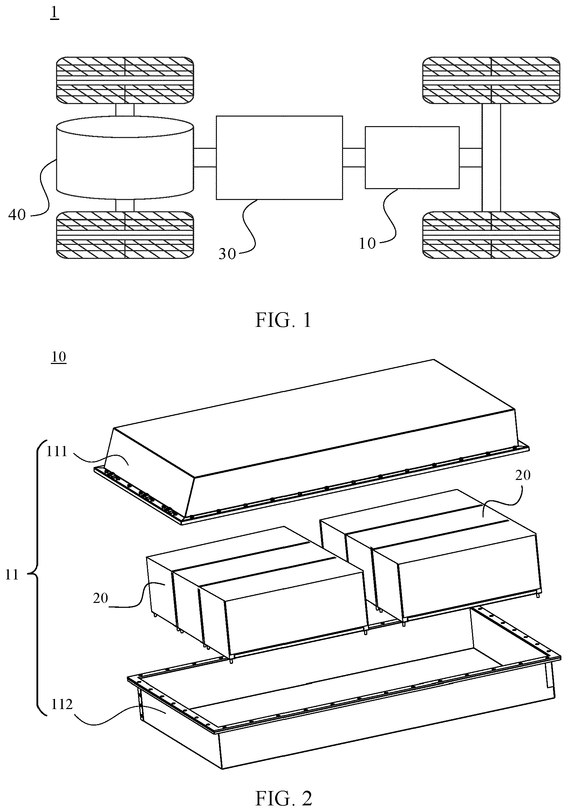

In addition, it is hereby noted that the following is a description of the structures or methods according to some embodiments of this application with reference to FIG. 1 to FIG. 20. For clarity and brevity, the description of some embodiments cites the reference numerals in the preceding drawings. However, the reference numerals are not necessarily all notated in the drawings corresponding to such embodiments.

For example, FIG. 1 is a schematic structural diagram of a vehicle 1 according to an embodiment of this application. The vehicle 1 may be an oil-fueled vehicle, a natural gas vehicle, or a new energy vehicle. The new energy vehicle may be a battery electric vehicle, a hybrid electric vehicle, a range-extended electric vehicle, or the like. A motor 40, a controller 30, and a battery 10 may be disposed inside the vehicle 1. The controller 30 is configured to control the battery 10 to supply power to the motor 40. For example, the battery 10 may be disposed at the bottom, front, or rear of the vehicle 1. The battery 10 may be configured to supply power to the vehicle 1. For example, the battery 10 may serve as an operating power supply of the vehicle 1 to power a circuit system of the vehicle 1. For example, the battery may be configured to meet operating power usage requirements of the vehicle 1 that is being started or navigated or running. In another embodiment of this application, the battery 10 serves not only as an operating power supply of the vehicle 1, but may also serve as a driving power supply of the vehicle 1 to provide driving power for the vehicle 1 in place of or partly in place of fuel oil or natural gas.

To meet different power usage requirements, the battery may include a plurality of battery cells. The plurality of battery cells may be connected in series, parallel, or series-and-parallel pattern. The series-and-parallel pattern means a combination of series connection and parallel connection. The battery may also be referred to as a battery pack. Optionally, the plurality of battery cells may be connected in series, parallel, or series-and-parallel pattern to form a battery module, and then a plurality of battery modules may be connected in series, parallel, or series-and-parallel pattern to form the battery. In other words, the plurality of battery cells may directly form the battery, or form the battery modules that are then used to form the battery.

For example, FIG. 2 is a schematic structural diagram of a battery 10 according to an embodiment of this application. The battery 10 may include a plurality of battery cells 20. The battery 10 may further include a box (also referred to as an enclosure) 11. The box 11 is hollow inside. A plurality of battery cells 20 are accommodated in the box 11. As an example, referring to FIG. 2, the box 11 may include two parts, herein referred to as a first part 111 and a second part 112 respectively. The first part 111 and the second part 112 are snap-fitted together to form an accommodation space that accommodates a plurality of battery cells 20. The shapes of the first part 111 and the second part 112 may depend on the shape of a plurality of battery cells 20 combined. An opening may be created on both the first part 111 and the second part 112. For example, the first part 111 and the second part 112 each may be a hollow cuboid, and each may include one opened surface. The opening of the first part 111 is opposite to the opening of the second part 112. The first part 111 and the second part 112 are snap-fitted to each other to form a box that includes a closed cavity. The plurality of battery cells 20 are combined and connected in parallel, series, or series-and-parallel pattern, and then placed into the box that is formed by snap-fitting the first part 111 and the second part 112.

Optionally, in an implementation, a plurality of battery cells (cell) 20 may be integrated to form at least one battery module (module) first, and then the at least one battery module is mounted in the box 11 to form a battery pack (pack). In this implementation, auxiliary structural members such as a crossbeam may be further disposed between the battery modules to improve the mounting stability of the battery module in the box 11.

Optionally, in another implementation, a plurality of battery cells 20 may be directly connected to each other, and mounted in the box 11 to form a battery pack. With the battery module as an intermediate mode being omitted, no auxiliary structural members such as a crossbeam need to be disposed in the box 11, thereby reducing the weight of the battery 10 and increasing the energy density of the battery 10. In the related art, this implementation is also referred to as a cell-to-pack (CTP) mounting technology.

Optionally, in still another embodiment, the box 11 may be integrated in an electrical device that employs the battery 10. In other words, the box 11 is integrally formed together with the structural member in the electrical device. The plurality of battery cells 20 connected to each other may be directly mounted in the box 11 in the electrical device. As an example, the box 11 may be integrally disposed in a local region of a chassis of the vehicle 1. The plurality of battery cells 20 connected to each other may be directly mounted on the chassis of the vehicle 1. In the related art, this implementation is also referred to as a cell-to-chassis (CTC) mounting technology.

Optionally, the battery 10 may further include other structures, details of which are omitted here. For example, the battery 10 may further include a busbar component. The busbar component is configured to implement electrical connection between the plurality of battery cells 20, such as parallel connection, series connection, or series-parallel connection. Specifically, the busbar component may implement the electrical connection between the battery cells 20 by connecting electrode terminals of the battery cells 20. Further, the busbar component may be fixed to the electrode terminals of the battery cells 20 by welding. Electrical energy of the plurality of battery cells 20 may be further led out by a conductive mechanism running through the box 11. Optionally, the conductive mechanism may also belong to the busbar component.

Depending on different power requirements, the number of battery cells 20 may be set to any value. A plurality of battery cells 20 may be connected in series, parallel, or series-and-parallel pattern to achieve a relatively high capacity or power.

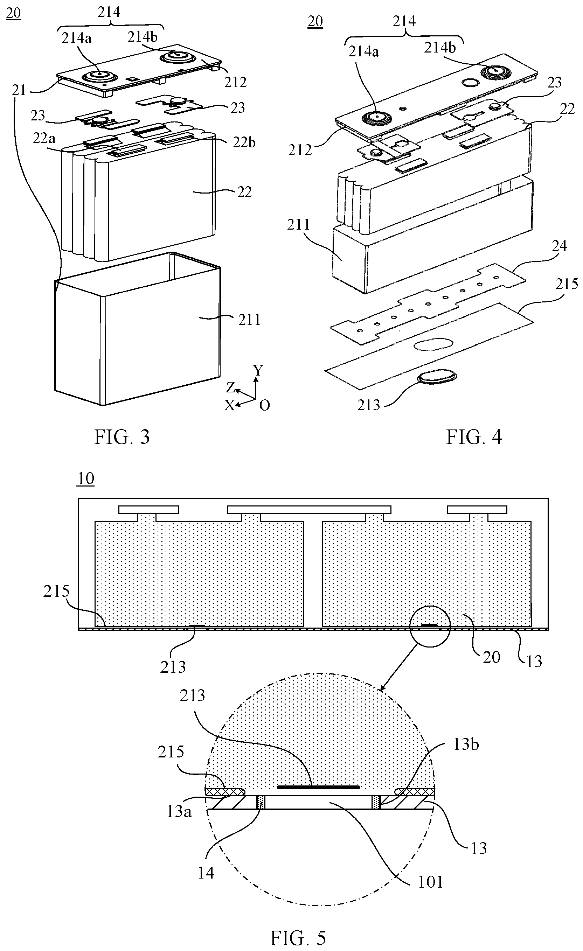

FIG. 3 is a schematic structural diagram of a battery cell 20 according to an embodiment of this application. The battery cell 20 may include a battery case 21 and one or more electrode assemblies 22 accommodated in the battery case 21. In some embodiments, the battery case 21 is also referred to as a shell.

Referring to FIG. 3, the battery case 21 may include a housing 211 and a cover plate 212. The walls of the housing 211 and the cover plate 212 are all referred to as walls of the battery cell 20. The shape of the housing 211 depends on the shape of one or more electrode assemblies 22 combined. For example, the housing 211 may be a hollow cuboid or cube or cylinder. At least one surface of the housing 211 is opened to facilitate placement of one or more electrode assemblies 22 into the housing 211. For example, when the housing 211 is a hollow cuboid or cube, one of faces of the housing 211 may be an opened face. That is, this face is not walled so that the inside of the housing 211 communicates with the outside. When the housing 211 is a hollow cylinder, an end face of the housing 211 may be an opened face. That is, this end face is not walled so that the inside of the housing 211 communicates with the outside. The cover plate 212 covers the opening and is connected to the housing 211 to form a closed cavity that is configured to accommodate the electrode assembly 22. The housing 211 is filled with an electrolyte such as an electrolytic solution.

Optionally, in an implementation, as shown in FIG. 3, one of the faces of the housing 211 is opened, and the cover plate 212 covers the opening and is connected to the housing 211. In another implementation, two opposite faces of the housing 211 are both opened, and the cover plate 212 may include a first cover plate and a second cover plate. The first cover plate and the second cover plate cover the openings on the two faces respectively, and are connected to the housing 211.

The battery cell 20 may further include two electrode terminals 214. Optionally, as shown in FIG. 3, the two electrode terminals 214 may be disposed on the same cover plate 212. Alternatively, in some other embodiments, the two electrode terminals 214 may be disposed on two cover plates such as the first cover plate and the second cover plate respectively. The disposition manner of the electrode terminals is not limited in embodiments of this application.

The cover plate 212 is generally in the shape of a flat plate, and the two electrode terminals 214 are fixed on a flat surface of the cover plate 212. The two electrode terminals 214 are a positive electrode terminal 214a and a negative electrode terminal 214b respectively. A connection component 23, also referred to as a current collection component 23, is disposed corresponding to each electrode terminal 214, located between the cover plate 212 and the electrode assembly 22, and configured to electrically connect the electrode assembly 22 and the electrode terminal 214.

As shown in FIG. 3, in the battery cell 20, each electrode assembly 22 includes a first tab 22a and a second tab 22b. The first tab 22a and the second tab 22b are of opposite polarities. For example, when the first tab 22a is a positive tab, the second tab 22b is a negative tab. The first tabs 22a of one or more electrode assemblies 22 are connected to one electrode terminal by one connection component 23. The second tabs 22b of one or more electrode assemblies 22 are connected to another electrode terminal by another connection component 23. For example, the positive electrode terminal 214a is connected to the positive tab by one connection component 23, and the negative electrode terminal 214b is connected to the negative tab by another connection component 23.

In the battery cell 20, the number of electrode assemblies 22 may be set flexibly as required in practical applications. As shown in FIG. 3, 4 independent electrode assemblies 22 are disposed in the battery cell 20.

FIG. 4 is a schematic structural diagram of a battery cell 20 according to another embodiment of this application. As a difference from the battery cell 20 shown in FIG. 3, a pressure relief mechanism 213 may be disposed on a wall of the battery cell 20. The pressure relief mechanism 213 is configured to be actuated to relieve an internal pressure or temperature when the internal pressure or temperature of the battery cell 20 reaches a threshold.

As an example, referring to FIG. 4, a pressure relief mechanism 213 may be disposed on a first wall 215 of the battery cell 20.

The first wall 215 is a part of the housing 211. The housing 211 may be formed by a one-piece forming process of the first wall 215 and the remaining part of the housing 211, or may be formed by a process in which the first wall 215 seals off the opening on the remaining part of the housing 211. For ease of illustration, the first wall 215 is detached from the housing 211 in FIG. 4, but this does not pose a limitation on the existence of an opening on the bottom side of the housing 211.

The pressure relief mechanism 213 may be a part of the wall on which the pressure relief mechanism is located. Alternatively, the pressure relief mechanism may be a discrete structure independent of the wall on which the pressure relief mechanism is located, and may be fixed onto the wall by means such as welding. For example, in the embodiment shown in FIG. 4, when the pressure relief mechanism 213 is a part of the first wall 215, the pressure relief mechanism 213 may be formed by creating a nick on the first wall 215. The thickness of the first wall 215 corresponding to the nick is less than the thickness of the remaining region other than the nick on the pressure relief mechanism 213. The nick is the most fragile position on the pressure relief mechanism 213. When the gas generated by the battery cell 20 is excessive so that the internal pressure of the housing 211 rises to a threshold or when the heat generated by internal reaction of the battery cell 20 causes the internal temperature of the battery cell 20 to rise to a threshold, the pressure relief mechanism 213 may break at the nick to cause communication between the inside of the housing 211 and the outside. The gas pressure and temperature are released outward through the ruptured pressure relief mechanism 213, thereby preventing the battery cell 20 from exploding.

Optionally, in an embodiment of this application, the pressure relief mechanism 213 and the electrode terminal 214 may be disposed on the same wall of the battery cell 20. As an example, both the electrode terminal 214 and the pressure relief mechanism 213 may be disposed on the top wall of the battery cell 20, that is, on the cover plate 212.

By disposing the pressure relief mechanism 213 and the electrode terminal 214 on the same wall of the battery cell 20 such as the cover plate 212 of the battery cell 20, the processing and mounting of the pressure relief mechanism 213 and the electrode terminal 214 are facilitated, and the production efficiency of the battery 10 is improved.

Alternatively, in another embodiment of this application, the pressure relief mechanism 213 and the electrode terminal 214 may be disposed on different walls of the battery cell 20. For example, in a case that the pressure relief mechanism 213 is disposed on the first wall 215 of the battery cell 20, the electrode terminal 214 may be disposed on a second wall of the battery cell 20. The second wall is different from the first wall 215. As an example, as shown in FIG. 4, the electrode terminal 214 is disposed on the top wall, that is, the cover plate 212, of the battery cell 20; and the pressure relief mechanism 213 is disposed on the bottom wall opposite to the top wall, that is, the first wall 215. Alternatively, the two electrode terminals 214 are disposed on the cover plate 212 and the first wall 215 of the battery cell 20 respectively, and the pressure relief mechanism 213 is disposed on another wall of the housing 21 different from the cover plate 212 and the first wall 215.

By disposing the pressure relief mechanism 213 and the electrode terminal 214 on different walls of the battery cell 20, the emissions of the battery cell 20 are caused to be farther away from the electrode terminals 214 when the pressure relief mechanism 213 is actuated, thereby reducing the impact caused by the emissions onto the electrode terminals 214 and the busbar component, and in turn, enhancing the battery safety. Further, when the electrode terminal 214 is disposed on the cover plate 212 of the battery cell 20, the pressure relief mechanism 213 is disposed on the bottom wall of the battery cell 20. In this way, the emissions of the battery cell 20 are caused to be expelled to the bottom of the battery 10 when the pressure relief mechanism 213 is actuated. In this way, the degree of danger of the emissions is reduced by using the components such as the thermal management component at the bottom of the battery 10. Additionally, the bottom of the battery 10 is usually far away from the user, thereby reducing the harm to the user.

In some embodiments, as shown in FIG. 4, the battery cell 20 may further include a backing plate 24. The backing plate 24 is located between the electrode assembly 22 and the bottom wall of the housing 211, and can serve a supporting function for the electrode assembly 22 and effectively prevent the electrode assembly 22 from interfering with the rounded corners around the bottom wall of the housing 211. In addition, one or more through-holes may be created on the backing plate 24. For example, a plurality of evenly arranged through-holes may be disposed. Alternatively, when the pressure relief mechanism 213 is disposed on the bottom wall of the housing 211, the through-hole is created in a position corresponding to the pressure relief mechanism 213 to facilitate guiding of liquid and gas. Specifically, this makes the space communicate between an upper surface and a lower surface of the backing plate 24. The gas generated inside the battery cell 20 and the electrolytic solution can freely pass through backing plate 24.

The pressure relief mechanism 213 may be any one of various possible pressure relief structures that are not limited herein. For example, the pressure relief mechanism 213 may be a temperature-sensitive pressure relief mechanism. The temperature-sensitive pressure relief mechanism is configured to melt when the internal temperature of the battery cell 20 equipped with the pressure relief mechanism 213 reaches a threshold; and/or, the pressure relief mechanism 213 may be a pressure-sensitive pressure relief mechanism. The pressure-sensitive pressure relief mechanism is configured to rupture when the internal air pressure of the battery cell 20 equipped with the pressure relief mechanism 213 reaches a threshold.

FIG. 5 is a schematic structural diagram and a close-up view of a battery according to an embodiment of this application. As shown in FIG. 5, the battery 10 may include a battery cell 20, an attachment component 13, and an insulation component 14.

The battery cell 20 includes a pressure relief mechanism 213. The pressure relief mechanism 213 is disposed on a first wall 215 of the battery cell 20. The pressure relief mechanism 213 is configured to be actuated to relieve an internal pressure when the internal pressure or an internal temperature of the battery cell 20 reaches a threshold. For example, the battery cell 20 may be a battery cell 20 shown in FIG. 4.

The first surface 13a (for example, the upper surface shown in FIG. 5) of the attachment component 13 is attached to the first wall 215. A first through-hole 101 located corresponding to the pressure relief mechanism 213 is created in the attachment component 13. The first through-hole 101 is configured to make the emissions from the battery cell 20 pass through the attachment component 13 upon actuation of the pressure relief mechanism 213.

At least a part of the insulation component 14 abuts and covers an inner wall 13b of the first through-hole 101 to dielectrically protect the inner wall 13b of the first through-hole.

In this embodiment of this application, the first through-hole 101 is created in the attachment component 13. At least a part of the insulation component 14 abuts and covers the inner wall 13b of the first through-hole. In this way, the insulation component 14 can dielectrically protect the inner wall 13b of the first through-hole, thereby improving the insulativity of the attachment component 13, and preventing a short circuit caused by direct contact between the battery cell 20 and the inner wall 13b of the first through-hole, and in turn, reducing safety hazards and enhancing battery safety. In addition, the first surface 13a of the attachment component 13 is attached to the first wall 215 equipped with a pressure relief mechanism 213. When the pressure relief mechanism 213 is actuated, the emissions of the battery cell 20 are expelled toward the first through-hole 101. The emissions can be quickly expelled away from the battery cell 20 after passing through the attachment component 13 through the first through-hole 101, thereby reducing the degree of danger of the emissions and enhancing battery safety.

In this embodiment of this application, the insulation component 14 is made of an insulation material. Insulation materials include, but are not limited to: resins (such as thermoplastic synthetic resin, thermosetting synthetic resin), plastics (such as polyethylene, and polyvinyl chloride), any product made thereof, and the like.

Understandably, in this embodiment of this application, that at least a part of the insulation component 14 abuts and covers the inner wall 13b of the first through-hole 101 means that at least a part of the insulation component 14 fully covers the inner wall 13b of the first through-hole. The insulation component 14 may abut and cover the inner wall 13b of the first through-hole by bonding, riveting, snap-fastening, interference fit, and the like. The manner of the abutting and covering is not limited herein.

Optionally, in some embodiments, the inner wall 13b of the first through-hole is coated with an insulation material.

The insulation material and the insulation component 14 implement double-layer insulation for the inner wall 13b of the first through-hole, thereby further improving the insulativity of the attachment component 13.

Optionally, the shape of the first through-hole 101 may be flexibly designed according to actual needs, for example, may be a cylinder, a cuboid, a cube, a triangular prism, a rectangular pyramidal frustum, a circular frustum, or another shape. The shape of the first through-hole is not limited herein.

Optionally, as shown in FIG. 5, in an embodiment of this application, the insulation component 14 may be in the shape of a hollow column. The outer surface of the sidewall of the hollow column is attached to the inner wall 13b of the first through-hole. By way of example and not limitation, the sidewall of the hollow column may be in interference fit with the inner wall 13b of the first through-hole. In this way, the insulation component 14 can be fastened to the attachment component 13 to implement dielectric protection for the inner wall 13b of the first through-hole.

Understandably, in this embodiment of this application, the shape of the insulation component 14 is adapted to the shape of the first through-hole 101. Therefore, the shape of the insulation component 14 may depend on the shape of the first through-hole 101. For example, if the first through-hole 101 is cylindrical, the insulation component 14 may be in the shape of a hollow column. If the first through-hole 101 is in the shape of a cube, the insulation component 14 may be in the shape of a hollow square ring, and so on.

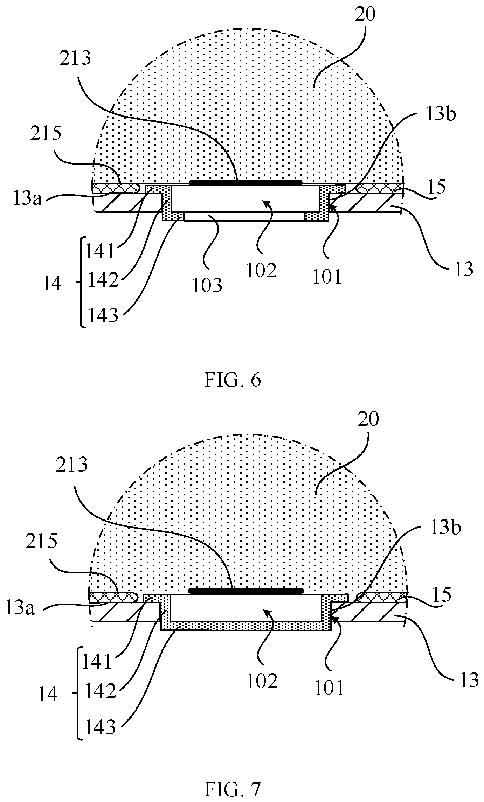

Optionally, as shown in FIG. 6, in another embodiment of this application, a first groove 102 is created in the insulation component 14. A sidewall 142 of the first groove is embedded in the first through-hole 101. An outer margin 141 of the first groove is attached to the first surface 13a.

In other words, the insulation component 14 may include a first portion and a second portion. The second portion is recessed away from the pressure relief mechanism 213 relative to the first portion to form the first groove 102. The first portion may be considered as an outer margin 141 of the first groove. A part of the second portion, which is parallel to (or attached to) the inner wall 13b of the first through-hole 101, may be considered as the sidewall 142 of the first groove. Optionally, in some embodiments, after being recessed, the second portion may include a part that covers (or blocks) the first through-hole 101. Therefore, a part of the second portion, which corresponds to the position of the first through-hole 101, may be considered as the bottom wall 143 of the first groove. In this embodiment of this application, all the remaining part of the insulation component 14 other than the bottom wall 143 of the first groove and the sidewall 142 of the first groove may be considered as the outer margin 141 of the first groove.

Understandably, in this embodiment of this application, that the sidewall 142 of the first groove is embedded in the first through-hole 101 means that at least a part of the sidewall 142 of the first groove is embedded in the first through-hole 101. That the outer margin 141 of the first groove is attached to the first surface 13a means that at least a part of the outer margin 141 of the first groove is attached to the first surface 13a of the attachment component 13.

In this way, in a practical mounting process, the insulation component 14 equipped with the first groove 102 can be directly embedded in the first through-hole 101 created in the attachment component 13, thereby not only covering the inner wall 13b of the first through-hole to dielectrically protect the inner wall 13b of the first through-hole, but also fixing the insulation component 14 to the attachment component 13 conveniently and stably and enhancing the assembling efficiency of the battery.

Optionally, referring to FIG. 6, in some embodiments, a second through-hole 103 may be created in a bottom wall 143 of the first groove. The second through-hole 103 is configured to make the emissions from the battery cell 20 pass through the insulation component 14 upon actuation of the pressure relief mechanism 213.

Therefore, when the pressure relief mechanism 213 is actuated, the emissions of the battery cell 20 can be quickly expelled away from the battery cell 20 through the second through-hole 103, thereby reducing the degree of danger of the emissions and enhancing the battery safety.

Optionally, in this embodiment of this application, the second through-hole 103 may be disposed opposite to the pressure relief mechanism 213. That is, the position of the second through-hole 103 corresponds to the position of the pressure relief mechanism 213. In this way, when the pressure relief mechanism 213 is actuated, the emissions can be directly expelled from the second through-hole 103.

Optionally, referring to FIG. 7, in some other embodiments, the bottom wall 143 of the first groove is configured to block the first through-hole 101. In other words, no through-hole is created in the bottom wall 143 of the first groove.

In this way, the bottom wall 143 of the first groove can isolate the pressure relief mechanism 213, so that the space in which the pressure relief mechanism 213 is located is prevented from communicating with the outside. In this way, foreign matters such as aluminum chippings in the box 11 are prevented from passing through the first through hole 101 and entering the space in which the pressure relief mechanism 213 is located. Therefore, this can prevent abnormal insulation of the battery cell, foreign matters damaging the pressure relief mechanism of the battery cell, and other problems, and avoid further safety problems.

Optionally, in order to facilitate the emissions to pass through the insulation component 14, in some embodiments, the bottom wall 143 of the first groove is configured to be broken by the emissions when the pressure relief mechanism 213 is actuated, so as to let the emissions pass through the insulation component 14. In other words, when the pressure relief mechanism 213 is not actuated, the bottom wall 143 of the first groove may block the first through-hole 101, so as to prevent the pressure relief performance of the pressure relief mechanism 213 from being impaired by foreign matters that enter the space in which the pressure relief mechanism 213 is located. When the pressure relief mechanism 213 is actuated, the bottom wall 143 of the first groove can be easily broken by the emissions to smoothly expel the emissions out of the battery cell 20 through the insulation component 14.

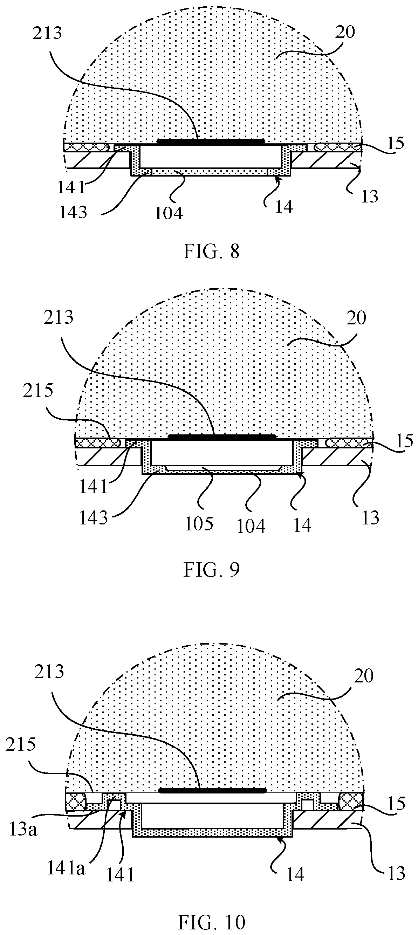

As an example, as shown in FIG. 8, a fragile region 104 may be disposed on the bottom wall 143 of the first groove. The fragile region 104 is configured to be broken by the emissions when the pressure relief mechanism 213 is actuated, so as to let the emissions pass through the fragile region 104. With the provision of the fragile region 104, the bottom wall 143 of the first groove can be more easily broken by the emissions of the battery cell 20 to facilitate rapid pressure relief for the battery cell 20.

Optionally, the fragile region 104 may be disposed opposite to the pressure relief mechanism 213. In this way, when the pressure relief mechanism 213 is actuated, the emissions can directly impact the fragile region 104 to burst the fragile region 104 open.

The fragile region 104 may be arranged in various manners so as to be easily broken by the emissions. The manners are not limited herein, and will be described with examples below.

Optionally, in an embodiment of this application, a part of the bottom wall 143 of the first groove, which is disposed opposite to the pressure relief mechanism 213, may be made of a low-melting material to form the fragile region 104. In other words, the melting point of the fragile region 104 is lower than the melting point of the remaining part of the insulation component 14. For example, the fragile region 104 is made of a material with a melting point lower than 400 °C.

When the pressure relief mechanism 213 is actuated, the fragile region 104 is more easily fusible and breakable by the emissions than the remaining part of the bottom wall 143 of the first groove.

Optionally, as shown in FIG. 9, in another embodiment of this application, a groove 105 opposite to the pressure relief mechanism 213 is created on the bottom wall 143 of the first groove. The fragile region 104 is formed on the bottom wall of the groove 105. In other words, the thickness of the fragile region 104 is less than the thickness of the remaining part of the insulation component 14. For example, the thickness of the fragile region 104 is less than or equal to 3 mm. For another example, the thickness of the fragile region 104 may be 1 mm or less. The thickness of the fragile region 104 may depend on actual requirements and/or experimental data, and is not limited herein.

The bottom wall of the groove 105 is weaker than the remaining region of the insulation component 14, and can be easily broken by the emissions. Therefore, when the pressure relief mechanism 213 is actuated, the emissions can break the bottom wall of the groove 105 and pass through the insulation component 14.

Optionally, the groove 105 is disposed on a surface of the bottom wall 143 of the first groove, the surface being oriented toward the first wall 215. In other words, the opening of the groove 105 is oriented toward the first wall 215.

Understandably, the opening of the groove 105 may be located back from the first wall 215 instead. In this case, the bottom wall of the groove 105 is also easily breakable by the emissions.

Understandably, the bottom wall 143 of the first groove may be thinned in other thinning manners to form the fragile region 104, for example, by creating a blind hole or a stepped hole on the bottom wall 143 of the first groove, details of which are omitted here.

Optionally, in another embodiment of this application, a nick is created on the bottom wall 143 of the first groove to form the fragile region 104. For example, a cross nick, a Pozi-shaped nick, an H-shaped nick, or the like may be created on the bottom wall 143 of the first groove.

The thickness of a position corresponding to the nick on the bottom wall 143 of the first groove is less than the thickness of the remaining region of the bottom wall 143 of the first groove other than the nick. Therefore, the nick is the most fragile position on the bottom wall 143 of the first groove. When the pressure relief mechanism 213 is actuated, the emissions can rupture the bottom wall 143 of the first groove at the nick. Therefore, the emissions can break the bottom wall 143 of the first groove and pass through the insulation component 14.

Understandably, the fragile region 104 may be implemented by at least two of three forms: a low-melting material, a small thickness, or a nick. In other words, the three forms may be implemented alone or in combination.

Optionally, as shown in FIG. 6 to FIG. 9, in an embodiment of this application, the attachment component 13 may be configured to be attached to the first wall 215 through a binder 15. The insulation component 14 is configured to prevent the binder 15 from being applied between the attachment component 13 and the pressure relief mechanism 213.

Therefore, the insulation component 14 not only dielectrically protects the inner wall 13b of the first through-hole created in the attachment component 13, but also effectively prevents, during battery production, the binder 15 from being applied between the attachment component 13 and the pressure relief mechanism 213, and avoids the resultant disruption or impairment of the actuation performance of the pressure relief mechanism 213. In addition, the insulation component increases the efficiency and accuracy of applying the binder 15, thereby improving the production efficiency of the battery.

Optionally, in some embodiments, the pressure relief mechanism 213 includes an actuation region. The pressure relief mechanism 213 is configured to form an exhaust passage in the actuation region when the internal pressure or internal temperature of the battery cell 20 reaches the threshold, where the exhaust passage is configured to relieve the internal pressure. The outer margin 141 of the first groove is configured to surround at least the actuation region to prevent the binder 15 from entering the actuation region.

The exhaust passage formed in the actuation region during actuation of the pressure relief mechanism 213 can guide the emissions of the battery cell 20 to be expelled outward through the formed exhaust passage in a case of thermal runaway of the battery, thereby improving the safety performance of the battery. The outer margin 141 of the first groove surrounds at least the actuation region, thereby preventing the binder 15 from flowing into the actuation region from any direction and from causing any hindrance or adverse effect onto the action of actuation of the pressure relief mechanism 213. Therefore, such arrangement more reliably prevents the binder 15 from interfering with the normal actuation of the pressure relief mechanism 213, and prevents the binder 15 from flowing in to block the exhaust passage and thereby obstruct the expulsion of emissions of the battery cell 20, and in turn, further improves safety performance of the battery.

In an embodiment of this application, the insulation portion 14 may adopt various possible configurations, so that the binder 15 used for fitting the battery cell 20 to the attachment component 13 can be isolated from a space between the attachment component 13 and the pressure relief mechanism 213. In other words, the applied binder 15 can be isolated from a space in which the binder 15, once flowing in, may hinder the pressure relief mechanism 213 from exerting the designed pressure relief function. For example, the insulation component 14 may be designed as a region that surrounds the pressure relief mechanism 213. This region can form an exhaust passage when the pressure relief mechanism 213 is actuated. The exhaust passage allows the emissions to flow out and is configured to relieve the internal pressure of the battery cell 20 (this region may also be referred to as an actuation region or an exhaust region). Alternatively, the insulation component may be a region attached onto the attachment component 13 and corresponding to the pressure relief mechanism 213, so as to surround the space provided by the attachment component 13 to allow actuation of the pressure relief mechanism 213, and so on.

In some embodiments, the insulation component 14 may be attached to a region on attachment component 13 before the binder 15 is applied, where the region corresponds to pressure relief mechanism 213. It is hereby noted that, all components bonded to the battery cell 20 by the binder 15 in the battery may be regarded as the attachment component or a part of the attachment component. All such components may use the insulation component 14. That is, the insulation component 14 may be attached onto the components before the binder 15 is applied. In this way, when the binder 15 is being applied, the insulation component 14 is able to prevent the binder 15 from entering a region on the attachment component 13, where the region corresponds to the pressure relief mechanism 213, and especially, corresponds to a position on the pressure relief mechanism 213, the position being configured to actuate movement to form an exhaust passage. The exhaust passage is configured to relieve the internal pressure of the battery cell 20 and allow the emissions to flow out, thereby ensuring that the pressure relief mechanism 213 can be actuated to serve the designed function normally. In addition, the insulation component 14 in use can also increase the speed and accuracy of applying the binder 15, prevent the binder 15 from being applied into a region related to the actuation of the pressure relief mechanism 213, and save production time and cost.

Optionally, as shown in FIG. 10, in some embodiments, a protruding portion 141a is disposed on the outer margin 141 of the first groove. The protruding portion 141a is configured to protrude beyond the first surface 13a and is disposed around the pressure relief mechanism 213. The protruding portion 141a is configured to prevent the binder 15 from being applied between the attachment component 13 and the pressure relief mechanism 213.

Such arrangement prevents, in a simple and effective manner during battery production, the binder 15 from being applied onto the surface of the pressure relief mechanism 213, and prevents the binder from hindering the actuation of the pressure relief mechanism 213.

As an example, the outer margin 141 of the first groove may include a main body and a protruding portion 141a. The main body is configured to be attached to or fitted to the attachment component 13. The protruding portion 141a protrudes outward from the surface of the main body. In a case of being fitted in place, the protruding portion 141a is configured to protrude from the surface of the main body and protrude away from the attachment component 13, that is, protrude toward the battery cell 20. The protruding portion 141a is disposed around the pressure relief mechanism 213. For example, the protruding portion 141a may assume a ring structure.

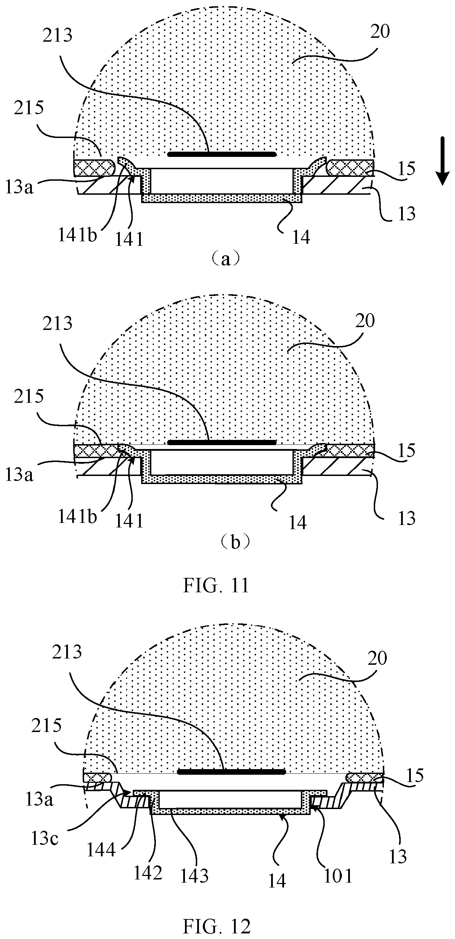

Optionally, as shown in FIG. 11, in an embodiment, the protruding portion 141a may include a flange structure 141b formed by bending the outer margin 141 of the first groove. For example, the flange structure 141b may be formed by turning up the outermost part of the outer margin 141 of the first groove toward one side of the battery cell 20 relative to the first surface 13a.

By making the edge of the insulation component 14 into a flange structure 141b, the processing and formation of the insulation component 14 are facilitated. Moreover, the flange structure prevents, in a simple and effective manner during battery production, the binder 15 from being applied onto the surface of the pressure relief mechanism 213.

The specific structure of the flange structure 141b is not limited herein as long as the edge of the insulation component 14 can serve the function of blocking the binder.

For example, when the insulation component 14 has been attached onto the attachment component 13 but the attachment component 13 has not been attached onto the battery cell 20, the flange structure 141b is in a free state. Referring to the schematic status diagram in part (a) of FIG. 11 that shows the status before the battery cell 20 is fitted to the attachment component 13, the height between the flange structure 141b and the first surface 13a may increase gradually along a direction of being away from a centerline of the first through-hole 101. Alternatively, in other embodiments, the height between the flange structure 141b and the first surface 13a may first increase along the direction of being away from the centerline of the first through-hole 101 and then decrease, or may keep unchanged.

When the attachment component 13 is attached onto the battery cell 20, the flange structure 141b may be deformed by a force. Referring to the schematic status diagram in part (b) of FIG. 11 showing the battery cell 20 and the attachment component 13 fitted together. The height between a part in contact with the battery cell 20 on the flange structure 141b and the first surface 13a may keep unchanged along a direction of being away from a centerline of the first through-hole 101. In contrast, the height between a part not in contact with the battery cell 20 on the flange structure 141b and the first surface 13a may increase gradually along the direction of being away from the centerline of the first through-hole 101.

Optionally, in an embodiment of this application, a maximum height of the protruding portion 141a from the first surface 13a is set to be greater than or equal to a preset height by which the binder 15 is to be applied. The protruding portion is compressed to the same height as the binder 15 when the battery cell 20 is attached to the attachment component 13.

By way of example and not limitation, as shown in part (a) and part (b) in FIG. 11, using an example in which the protruding portion 141a includes a flange structure 141b, before the battery cell 20 is attached onto the attachment portion 13, the maximum height between the flange structure 141b and the first surface 13a is greater than or equal to a preset height by which the binder 15 is applied. After the battery cell 20 is attached to the attachment component 13, the maximum height between the flange structure 141b and the first surface 13a is equal to the height of the compressed binder 15.

Such arrangement ensures that the protruding portion 141a effectively prevents the binder 15 from being applied between the attachment component 13 and the pressure relief mechanism 213, and prevents the insulation component 14 from interfering with the reliable adhesion between the attachment component 13 and the pressure relief mechanism 213 and from interfering with the actuation of the pressure relief mechanism 213. In addition, when the battery cell 20 is adhered and press-fitted or bonded to the attachment component 13 by the binder 15, the protruding portion 141a may be compressed to the same height as the binder 15. In this way, the protruding portion 141a leaves no gap on a bonding surface between the battery cell 20 and the attachment component 13, thereby more reliably ensuring that the binder 15 is isolated from a region in which the pressure relief mechanism 213 is actuated and forms an exhaust passage.

Optionally, in some embodiments, the region equipped with the first through-hole 101 on the attachment component 13 may be a flat plate region shown in FIG. 5 to FIG. 11. In some other embodiments, a groove may be further created in the region equipped with the first through-hole 101 on the attachment component 13.

Optionally, as shown in FIG. 12, in an embodiment, a second groove 13c opposite to the pressure relief mechanism 213 is created on the attachment component 13. A first through-hole 101 is created in a bottom wall of the second groove 13c. The outer margin 141 of the first groove includes a first attachment wall 144 connected to the sidewall 142 of the first groove. The first attachment wall 144 is attached to the bottom wall of the second groove 13c.

In this embodiment of this application, by creating the second groove 13c opposite to the pressure relief mechanism 213 in the attachment component 13, a cushion space is provided for the emissions of the battery cell 20, thereby reducing the impact pressure exerted by the emissions of the battery cell 20 onto an external structure or component, and further improving the safety performance of the battery.

It is hereby noted that, when the first attachment wall 144 is attached to the bottom wall of the second groove 13c, the remaining part other than the first attachment wall 144 on the outer margin 141 of the first groove may also be attached to the bottom wall of the second groove 13c, as illustrated in FIG. 12. Alternatively, the remaining part other than the first attachment wall 144 on the outer margin 141 of the first groove may extend to the first surface 13a, so as to be attached to the first surface 13a.

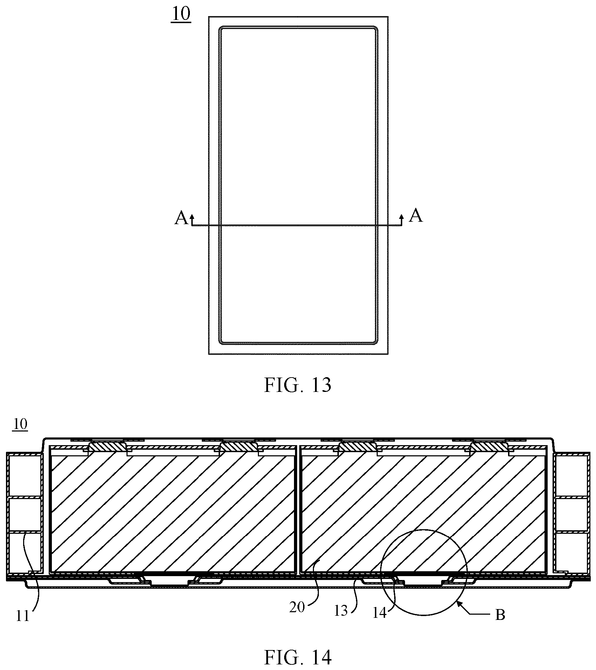

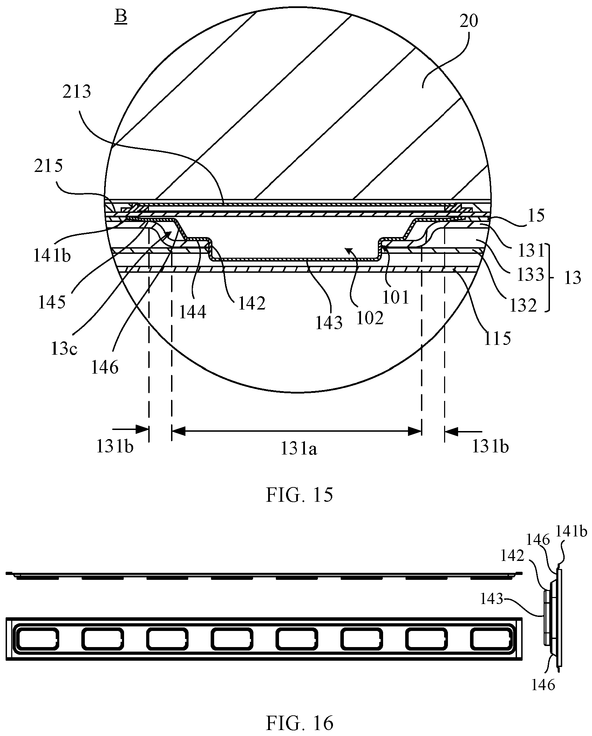

FIG. 13 shows a schematic top view of a battery according to an embodiment of this application; FIG. 14 shows a schematic cross-sectional view of the battery in FIG. 13 sectioned along an A-A line; and FIG. 15 shows a close-up view of a local structure B of the battery shown in FIG. 14. The structure of the insulation component 14 is described below with reference to FIG. 13 to FIG. 15.

As shown in FIG. 13 to FIG. 15, the attachment component 13 may include a first heat transfer plate 131 and a second heat transfer plate 132. The first heat transfer plate 131 is located between the first wall 215 and the second heat transfer plate 132, and is attached to the first wall 215. A first region 131a of the first heat transfer plate 131 is recessed toward the second heat transfer plate 132 to form a second groove 13c. The first region 131a is connected to the second heat transfer plate 132. The first through-hole 101 is created in the first region 131a.

The outer margin 141 of the first groove may include a first attachment wall 144, a second attachment wall 145, and a connection wall 146. The second attachment wall 145 is connected to the first attachment wall 144 by the connection wall 146. The first attachment wall 144 is attached to the first region 131a. The second attachment wall 145 is attached to a second region 131b of the first heat transfer plate 131. The second region 131b is configured to be attached to the first wall 215.

Optionally, the outer margin 141 of the first groove further includes a flange structure 141b located on an edge.

In this embodiment of this application, the insulation component 14 that assumes the above structure can dielectrically protect the inner wall of the first through-hole 101. In addition, the bottom wall 143 of the first groove may block the first through-hole 101, so as to prevent foreign matters such as aluminum chippings from entering the space in which the pressure relief mechanism 213 is located. Moreover, the flange structure 141b located at the edge of the outer margin 141 of the first groove can also prevent the binder 15 from entering the space between the pressure relief mechanism 213 and the attachment component 13, thereby ensuring that the pressure relief mechanism 213 can be normally actuated.

Optionally, in some embodiments, a clearance may be arranged between the connection wall 146 and a sidewall of the second groove 13c; or, the connection wall 146 may abut and cover a sidewall of the second groove 13c. Specifically, this may be designed as actually required, and is not limited herein.

Optionally, still referring to FIG. 15, in an embodiment, the insulation component 14 is configured to provide a space that allows actuation of the pressure relief mechanism 213. An avoidance cavity is formed between the insulation component 14 and the pressure relief mechanism 213. The avoidance cavity provides a deformation space for the pressure relief mechanism 213, and allows the pressure relief mechanism 213 to deform and rupture toward the attachment component 13. Specifically, the avoidance cavity may be a hermetically closed cavity or a non-hermetically-closed cavity formed by gathering the insulation component 14 and the pressure relief mechanism 213 together. As an example, the first groove 102 may serve as an avoidance cavity capable of being opened upon actuation of the pressure relief mechanism 213.

In a case that the first groove 102 serves as an avoidance cavity, the first groove 102 needs to meet the condition of being openable upon actuation of the pressure relief mechanism 213. Specifically, the depth of the first groove 102 is correlated with dimensions of the pressure relief mechanism 213. As an embodiment of this application, the depth of the first groove 102 is greater than 1 mm. For example, the depth of the first groove 102 may be 3 mm or greater than 3 mm, thereby making it easier to open the pressure relief mechanism 213. The area of the opening of the first groove 102 is also correlated with the area of the pressure relief mechanism 213. To open the pressure relief mechanism 213, a ratio of the area of the opening of the first groove 102 to the area of the pressure relief mechanism 213 needs to be greater than a specified value. For example, a value range of the ratio of the area of the opening of the first groove 102 to the area of the pressure relief mechanism 213 may be 0.5 to 2.

Understandably, in some embodiments, the first groove 102 may be in a stepped shape. In this case, the opening of the first groove 102 may be regarded as an opening formed by a junction between the connection wall 146 and the second attachment wall 145.

Optionally, in some embodiments, the attachment component 13 may be a thermal management component. The thermal management component is configured to accommodate a fluid to regulate temperature for the battery cell 20. In a case of lowering the temperature of the battery cell 20, the thermal management component may accommodate a cooling medium to regulate the temperature of the battery cell 20. In this case, the thermal management component is also referred to as a cooling component, a cooling system, a cooling plate, or the like. In addition, the thermal management component may be further configured to heat up the battery cell. The use of the thermal management component is not limited herein.

Optionally, the fluid may circulate in order to achieve a better effect of temperature regulation. For example, the first heat transfer plate 131 and the second heat transfer plate 132 may form a flow channel 133 configured to accommodate the fluid.

Optionally, a part of the first heat transfer plate 131, which is configured to form the flow channel 133, may be equipped with a fragile structure that is easily breakable by high-temperature and high-pressure emissions. Examples of the fragile structure include a thinned part, a nick, a fragile portion made of a fragile material, a fragile portion made of a low-melting material, and the like. In this way, when the pressure relief mechanism 213 is actuated, the emissions from the battery cell 20 can break the fragile structure disposed on the first heat transfer plate 131, let the cooling medium such as a cooling liquid in the flow channel 133 flow out, and rapidly decrease the temperature and pressure of the high-temperature high-pressure emissions from the battery cell 20, thereby protecting other components such as a non-thermal-runaway battery cell 20 in the battery 10.

Optionally, in some embodiments, the battery 10 may further include a protection component 115, as shown in FIG. 15. The protection component 115 in this application means a component disposed on a side of the thermal management component to provide protection for the thermal management component and the battery cell 20, the side being away from the battery cell 20. In some embodiments, the space between the protection component 115 and the thermal management component may be configured to collect the emissions of the battery cell.

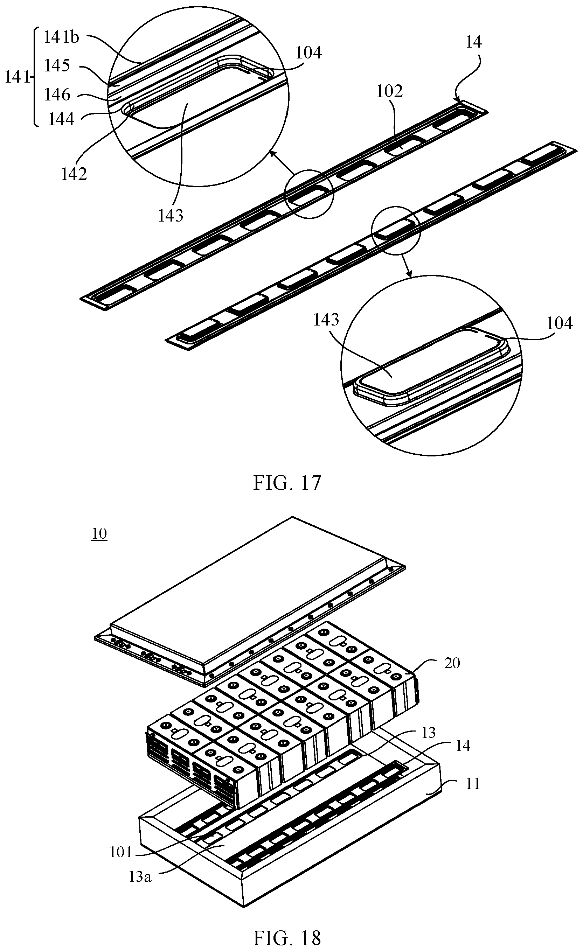

FIG. 16 and FIG. 17 are schematic structural diagrams of an insulation component according to an embodiment of this application. FIG. 16 is a schematic three-view drawing of the insulation component, and FIG. 17 is a schematic three-dimensional view of the insulation component viewed from two different angles.

Referring to FIG. 16 and FIG. 17, one or more first grooves 102 may be created in the insulation component 14. In an example, one first groove 102 is created. The first groove 102 may include a bottom wall 143 of the first groove, a sidewall 142 of the first groove, and an outer margin 141 of the first groove. The bottom wall 143 of the first groove may be configured to block the first through-hole 101 created in the attachment component 13. The sidewall 142 of the first groove is configured to abut and cover the inner wall of the first through-hole 101 to dielectrically protect the inner wall of the first through-hole 101. The outer margin 141 of the first groove may be attached to the attachment component 13.

More specifically, the outer margin 141 of the first groove may include a first attachment wall 144, a second attachment wall 145, a connection wall 146, and a flange structure 141b. The second attachment wall 145 is connected to the first attachment wall 144 by the connection wall 146. The edge of the second attachment wall 145 forms a flange structure 141b. Here, the first attachment wall 144 is configured to be attached to the first region 131a of the first heat transfer plate 131. The second attachment wall 145 is configured to be attached to a second region 131b of the first heat transfer plate 131. The flange structure 141b is configured to block the binder from entering the first groove 102, so as to prevent the binder from being applied between the pressure relief mechanism 213 and the insulation component 14.

In the embodiments shown in FIG. 16 and FIG. 17, the insulation component 14 is designed in such a way as to include an elongated sheet-like main body. Each main body includes a row of first grooves 102 that are recessed. Understandably, the main body of the insulation component 14 and the first groove 102 in this application may be in different shapes depending on the factors such as the shape and structure of the pressure relief mechanism 213. Considering improvement of the gravimetric energy density or volumetric energy density of the battery, the main body of the insulation component 14 is usually thin, and therefore, may be generally in the form of variously shaped films or sheets. For example, the wall thickness of the insulation component 14 or the main body of the insulation component 14 may fall between 0.01 mm and 0.05 mm. Therefore, the shape of the first groove 102 may be, for example, an elongated oval shape shown in the drawing, or may be a shape such as a circle, an ellipse, or a quadrangle. When a plurality of first grooves 102 are created in the main body of an insulation component 14, the flange structures 141b corresponding to the plurality of first grooves 102 may be formed in one piece.

Optionally, for an insulation component 14, the main body of the insulation component 14 may be designed in such a way as to include a single first groove 102, a plurality of rows of first grooves 102, or a plurality of first grooves 102 arranged in other ways, as long as the arrangement and the relative position of the first grooves 102 can be adapted to the mounting position of the pressure relief mechanism 213 of the battery cell 20 in the battery.

As an example, when a plurality of first grooves 102 are created in the main body of the insulation component 14, each first groove 102 among the plurality of first grooves 102 is aligned with one pressure relief mechanism 213 (or aligned with the exhaust region of the pressure relief mechanism 213) separately. Therefore, the process of fitting the insulation component 14 to the attachment component 13 is simplified, thereby improving the assembling efficiency of the battery. In addition, when the insulation component 14 is fitted in place, the flange structures 141b corresponding to the plurality of first grooves 102 can serve to isolate the binder for the pressure relief mechanisms 213 of the plurality of battery cells 20.

Understandably, this application does not limit the arrangement direction or position of the pressure relief mechanism 213 in the battery cell 20. In fact, no matter whether the pressure relief mechanism 213 is arranged on a lower part, an upper part, or a lateral part of the battery cell 20, the relevant design of the insulation component 14 disclosed in this application can be properly applied, and can exert beneficial effects of ensuring the pressure relief mechanism 213 to implement designed functions and release the high-temperature high-pressure emissions out of the battery cell when necessary, and therefore, ensuring the safe use of the battery.

Optionally, in an embodiment of this application, the insulation component 14 may be made of a thermoplastic material through a vacuum forming process, thereby simplifying the manufacturing process of the insulation component 14 and reducing cost.

Optionally, in an embodiment of this application, for a part not equipped with the flange structure 141b on the insulation component 14, foam or other components or the like may be disposed to block the binder.

FIG. 18 is a schematic exploded view of a battery 10 according to an embodiment of this application. In the embodiment shown in FIG. 18, the attachment component 13 may be attached to the box 11, and, through the first surface 13a, attached to the first wall 215 of the battery cell 20. At least a part of the insulation component 14 abuts and covers an inner wall of the first through-hole 101 created in the attachment component 13. For a detailed description of each component in the battery 10, reference may be made to the foregoing embodiments. For brevity, details are omitted here.

An embodiment of this application further provides an electrical device. The electrical device may include the battery 10 according to any one of the foregoing embodiments. Optionally, the electrical device may be a vehicle 1, watercraft, or spacecraft.

Described above are the battery cell, battery, and electrical device according to some embodiments of this application. The following describes a method and equipment for manufacturing a battery cell according to some embodiments of this application. For information not detailed in the following embodiments, reference may be made to the preceding embodiments.

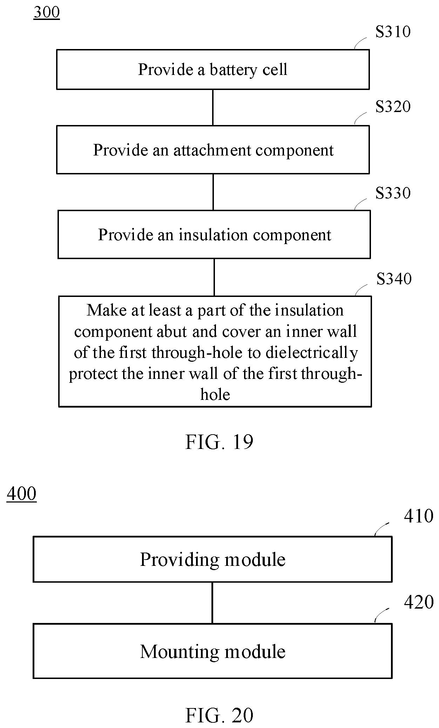

FIG. 19 is a schematic flowchart of a method 300 for manufacturing a battery 10 according to an embodiment of this application. As shown in FIG. 19, the method 300 may include the following steps:
S310. Providing a battery cell 20.

The battery cell 20 includes a pressure relief mechanism 213. The pressure relief mechanism 213 is disposed on a first wall 215 of the battery cell 20. The pressure relief mechanism 213 is configured to be actuated to relieve an internal pressure when the internal pressure or an internal temperature of the battery cell 20 reaches a threshold.

S320. Providing an attachment component 13.

A first surface 13a of the attachment component 13 is attached to the first wall 215. A first through-hole 101 located corresponding to the pressure relief mechanism 213 is created in the attachment component 13. The first through-hole 101 is configured to make emissions from the battery cell 20 pass through the attachment component 13 upon actuation of the pressure relief mechanism 213.

S330. Providing an insulation component 14.

S340. Making at least a part of the insulation component 14 abut and cover an inner wall 13b of the first through-hole to dielectrically protect the inner wall 13b of the first through-hole.

FIG. 20 is a schematic block diagram of an apparatus 400 for manufacturing a battery 10 according to an embodiment of this application. As shown in FIG. 20, the equipment 400 may include:
a providing module 410, where the providing module 410 is configured to:
   provide a battery cell 20, where the battery cell 20 includes a pressure relief mechanism 213, the pressure relief mechanism 213 is disposed on a first wall 215 of the battery cell 20, the pressure relief mechanism 213 is configured to be actuated to relieve an internal pressure when the internal pressure or an internal temperature of the battery cell 20 reaches a threshold;
   provide an attachment component 13, where a first surface 13a of the attachment component 13 is attached to the first wall 215, a first through-hole 101 located corresponding to the pressure relief mechanism 213 is created in the attachment component 13, and the first through-hole 101 is configured to make emissions from the battery cell 20 pass through the attachment component 13 upon actuation of the pressure relief mechanism 213; and
   provide an insulation component 14; and
a mounting module 420, configured to make at least a part of the insulation component 14 abut and cover an inner wall 13b of the first through-hole to dielectrically protect the inner wall 13b of the first through-hole.

Although this application has been described with reference to exemplary embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A battery (10), wherein the battery (10) comprises:
a battery cell (20), comprising a pressure relief mechanism (213), wherein the pressure relief mechanism (213) is disposed on a first wall (215) of the battery cell (20), and the pressure relief mechanism (213) is configured to be actuated to relieve an internal pressure when the internal pressure or an internal temperature of the battery cell (20) reaches a threshold;
an attachment component (13), wherein a first surface (13a) of the attachment component (13) is attached to the first wall (215), a first through-hole (101) located corresponding to the pressure relief mechanism (213) is created in the attachment component (13), and the first through-hole (101) is configured to make emissions from the battery cell (20) pass through the attachment component (13) upon actuation of the pressure relief mechanism (213); and
an insulation component (14), wherein at least a part of the insulation component (14) abuts and covers an inner wall (13b) of the first through-hole (101) to dielectrically protect the inner wall (13b) of the first through-hole (101);
wherein a first groove (102) is created in the insulation component (14), a sidewall (142) of the first groove (102) is embedded in the first through-hole (101), and an outer margin (141) of the first groove (102) is attached to the first surface (13a);
wherein a bottom wall (143) of the first groove (102) is configured to block the first through-hole (101); and
the bottom wall (143) of the first groove (102) is configured to be broken by the emissions when the pressure relief mechanism (213) is actuated, so as to let the emissions pass through the insulation component (14).

2. The battery (10) according to claim 1, wherein, a second through-hole (103) is created in a bottom wall (143) of the first groove (102), and the second through-hole (103) is configured to make the emissions from the battery cell (20) pass through the insulation component (14) upon actuation of the pressure relief mechanism (213).

3. The battery (10) according to claim 1, wherein, a fragile region (104) is disposed on the bottom wall (143) of the first groove (102), and the fragile region (104) is configured to be broken by the emissions when the pressure relief mechanism (213) is actuated, so as to let the emissions pass through the fragile region (104).

4. The battery (10) according to claim 3, wherein, the fragile region (104) satisfies at least one of the following conditions:
a melting point of the fragile region (104) is lower than a melting point of a remaining part of the insulation component (14);
a thickness of the fragile region (104) is less than a thickness of the remaining part of the insulation component (14); and
a nick is created in the fragile region (104).

5. The battery (10) according to any one of claims 1 to 4, wherein
the attachment component (13) is configured to be attached to the first wall (215) through a binder; and the insulation component (14) is configured to prevent the binder from being applied between the attachment component (13) and the pressure relief mechanism (213); optionally,
wherein, the pressure relief mechanism (213) comprises an actuation region, and the pressure relief mechanism (213) is configured to form an exhaust passage in the actuation region when the internal pressure or internal temperature of the battery cell (20) reaches the threshold, wherein the exhaust passage is configured to relieve the internal pressure; and
the outer margin (141) of the first groove (102) is configured to surround at least the actuation region to prevent the binder from entering the actuation region.

6. The battery (10) according to claim 5, wherein, a protruding portion (141a) is disposed on the outer margin (141) of the first groove (102), the protruding portion (141a) is configured to protrude beyond the first surface (13a) and is disposed around the pressure relief mechanism (213), and the protruding portion (141a) is configured to prevent the binder from being applied between the attachment component (13) and the pressure relief mechanism (213).

7. The battery (10) according to claim 6, wherein, the protruding portion (141a) comprises a flange structure (141b) formed by bending the outer margin (141) of the first groove (102); and/or,
wherein a maximum height of the protruding portion (141a) from the first surface (13a) is set to be greater than or equal to a preset height by which the binder is to be applied, and the protruding portion is compressed to the same height as the binder when the battery cell (20) is attached to the attachment component (13).

8. The battery (10) according to any one of claims 1 to 7, wherein, a second groove (13c) disposed opposite to the pressure relief mechanism (213) is created in the attachment component (13), and the first through-hole (101) is created in a bottom wall of the second groove (13c);
the outer margin (141) of the first groove (102) comprises a first attachment wall (144) connected to the sidewall (142) of the first groove (102), and the first attachment wall (144) is attached to the bottom wall of the second groove (13c); and
the remaining part other than the first attachment wall (144) on the outer margin (141) of the first groove (102) extends to the first surface (13a), so as to be attached to the first surface (13a).

9. The battery (10) according to claim 8, wherein, the attachment component (13) comprises a first heat transfer plate (131) and a second heat transfer plate (132), the first heat transfer plate (131) is located between the first wall (215) and the second heat transfer plate (132) and attached to the first wall (215), a first region (131a) of the first heat transfer plate (131) is recessed toward the second heat transfer plate (132) to form the second groove (13c), the first region (131a) is connected to the second heat transfer plate (132), and the first through-hole (101) is created in the first region (13 1a); and
the outer margin (141) of the first groove (102) further comprises a second attachment wall (145) and a connection wall (146), the second attachment wall (145) is connected to the first attachment wall (144) by the connection wall (146), the first attachment wall (144) is attached to the first region (131a), the second attachment wall (145) is attached to a second region (131b) of the first heat transfer plate (131), and the second region (131b) is configured to be attached to the first wall (215);
optionally, wherein a clearance is arranged between the connection wall (146) and a sidewall of the second groove (13c); or, the connection wall (146) abuts and covers a sidewall of the second groove (13c).

10. The battery (10) according to any one of claims 1 to 9, wherein, the insulation component (14) is configured to provide a space that allows actuation of the pressure relief mechanism (213), and an avoidance cavity is formed between the insulation component (14) and the pressure relief mechanism (213).

11. The battery (10) according to any one of claims 1 to 10, wherein the inner wall (13b) of the first through-hole (101) is coated with an insulation material.

12. The battery (10) according to any one of claims 1 to 11, wherein the attachment component (13) is a thermal management component, and the thermal management component is configured to accommodate a fluid to regulate temperature for the battery cell (20).

13. An electrical device, wherein the electrical device comprises the battery (10) according to any one of claims 1 to 12, and the battery (10) is configured to provide electrical energy for the electrical device.

14. A method for manufacturing a battery (10), wherein the method comprises:
providing a battery cell (20), wherein the battery cell (20) comprises a pressure relief mechanism (213), the pressure relief mechanism (213) is disposed on a first wall (215) of the battery cell (20), and the pressure relief mechanism (213) is configured to be actuated to relieve an internal pressure when the internal pressure or an internal temperature of the battery cell (20) reaches a threshold;
providing an attachment component (13), wherein a first surface (13a) of the attachment component (13) is attached to the first wall (215), a first through-hole (101) located corresponding to the pressure relief mechanism (213) is created in the attachment component (13), and the first through-hole (101) is configured to make emissions from the battery cell (20) pass through the attachment component (13) upon actuation of the pressure relief mechanism (213);
providing an insulation component (14);
making at least a part of the insulation component (14) abut and cover an inner wall (13b) of the first through-hole (101) to dielectrically protect the inner wall (13b) of the first through-hole (101); and
creating a first groove (102) in the insulation component (14), wherein:
a sidewall (142) of the first groove (102) is embedded in the first through-hole (101), and an outer margin (141) of the first groove (102) is attached to the first surface (13a);
a bottom wall (143) of the first groove (102) is configured to block the first through-hole (101); and
the bottom wall (143) of the first groove (102) is configured to be broken by the emissions when the pressure relief mechanism (213) is actuated, so as to let the emissions pass through the insulation component (14).

## Patentansprüche

1. Batterie (10), wobei die Batterie (10) Folgendes umfasst:
eine Batteriezelle (20), umfassend einen Druckentlastungsmechanismus (213), wobei der Druckentlastungsmechanismus (213) an einer ersten Wand (215) der Batteriezelle (20) angeordnet ist und der Druckentlastungsmechanismus (213) konfiguriert ist, um betätigt zu werden, um einen Innendruck abzulassen, wenn der Innendruck oder eine Innentemperatur der Batteriezelle (20) einen Schwellenwert erreicht;
eine Befestigungskomponente (13), wobei eine erste Oberfläche (13a) der Befestigungskomponente (13) an der ersten Wand (215) befestigt ist, ein erstes Durchgangsloch (101), das sich entsprechend dem Druckentlastungsmechanismus (213) befindet, in der Befestigungskomponente (13) erzeugt wird, und das erste Durchgangsloch (101) konfiguriert ist, um bei Betätigung des Druckentlastungsmechanismus (213) Emissionen aus der Batteriezelle (20) durch die Befestigungskomponente (13) hindurch zu lassen; und
eine Isolierkomponente (14), wobei mindestens ein Teil der Isolierkomponente (14) an einer Innenwand (13b) des ersten Durchgangslochs (101) anliegt und diese abdeckt, um die Innenwand (13b) des ersten Durchgangslochs (101) dielektrisch zu schützen;
wobei in der Isolierkomponente (14) eine erste Nut (102) erzeugt wird, eine Seitenwand (142) der ersten Nut (102) in das erste Durchgangsloch (101) eingebettet ist und ein Außenrand (141) der ersten Nut (102) an der ersten Oberfläche (13a) befestigt ist;
wobei eine Bodenwand (143) der ersten Nut (102) konfiguriert ist, um das erste Durchgangsloch (101) zu blockieren; und
die Bodenwand (143) der ersten Nut (102) konfiguriert ist, um durch die Emissionen aufgebrochen zu werden, wenn der Druckentlastungsmechanismus (213) betätigt wird, um die Emissionen durch die Isolierkomponente (14) hindurch zu lassen.

2. Batterie (10) nach Anspruch 1, wobei ein zweites Durchgangsloch (103) in einer Bodenwand (143) der ersten Nut (102) erzeugt wird und das zweite Durchgangsloch (103) konfiguriert ist, um die Emissionen aus der Batteriezelle (20) bei Betätigung des Druckentlastungsmechanismus (213) durch die Isolierkomponente (14) hindurch zu lassen.

3. Batterie (10) nach Anspruch 1, wobei eine zerbrechliche Region (104) an der Bodenwand (143) der ersten Nut (102) angeordnet ist und die zerbrechliche Region (104) konfiguriert ist, um durch die Emissionen aufgebrochen zu werden, wenn der Druckentlastungsmechanismus (213) betätigt wird, um die Emissionen durch die zerbrechliche Region (104) hindurch zu lassen.

4. Batterie (10) nach Anspruch 3, wobei die zerbrechliche Region (104) mindestens eine der folgenden Bedingungen erfüllt:
ein Schmelzpunkt der zerbrechlichen Region (104) ist niedriger als ein Schmelzpunkt eines übrigen Teils der Isolierkomponente (14);
eine Dicke der zerbrechlichen Region (104) ist geringer als eine Dicke des übrigen Teils der Isolierkomponente (14); und
eine Kerbe wird in der zerbrechlichen Region (104) erzeugt.

5. Batterie (10) nach einem der Ansprüche 1 bis 4, wobei
die Befestigungskomponente (13) konfiguriert ist, um über ein Bindemittel an der ersten Wand (215) befestigt zu werden; und die Isolierkomponente (14) konfiguriert ist, um zu verhindern, dass das Bindemittel zwischen der Befestigungskomponente (13) und dem Druckentlastungsmechanismus (213) aufgetragen wird; optional,
wobei der Druckentlastungsmechanismus (213) eine Betätigungsregion umfasst und der Druckentlastungsmechanismus (213) konfiguriert ist, um in der Betätigungsregion einen Entlüftungsdurchgang auszubilden, wenn der Innendruck oder die Innentemperatur der Batteriezelle (20) den Schwellenwert erreicht, wobei der Entlüftungsdurchgang konfiguriert ist, um den Innendruck abzulassen; und
der Außenrand (141) der ersten Nut (102) konfiguriert ist, um mindestens die Betätigungsregion zu umgeben, um zu verhindern, dass das Bindemittel in die Betätigungsregion eindringt.

6. Batterie (10) nach Anspruch 5, wobei ein vorstehender Abschnitt (141a) am Außenrand (141) der ersten Nut (102) angeordnet ist, wobei der vorstehende Abschnitt (141a) konfiguriert ist, um über die erste Oberfläche (13a) vorzustehen, und um den Druckentlastungsmechanismus (213) herum angeordnet ist, und der vorstehende Abschnitt (141a) konfiguriert ist, um zu verhindern, dass das Bindemittel zwischen der Befestigungskomponente (13) und dem Druckentlastungsmechanismus (213) aufgetragen wird.

7. Batterie (10) nach Anspruch 6, wobei der vorstehende Abschnitt (141a) eine Flanschstruktur (141b) umfasst, die durch Biegen des Außenrandes (141) der ersten Nut (102) ausgebildet wird; und/oder,
wobei eine maximale Höhe des vorstehenden Abschnitts (141a) von der ersten Oberfläche (13a) so festgelegt ist, dass sie größer oder gleich einer voreingestellten Höhe ist, um die das Bindemittel aufgetragen werden soll, und der vorstehende Abschnitt auf dieselbe Höhe wie das Bindemittel zusammengedrückt wird, wenn die Batteriezelle (20) an der Befestigungskomponente (13) befestigt wird.

8. Batterie (10) nach einem der Ansprüche 1 bis 7, wobei in der Befestigungskomponente (13) eine zweite Nut (13c) erzeugt wird, die dem Druckentlastungsmechanismus (213) gegenüberliegend angeordnet ist, und das erste Durchgangsloch (101) in einer Bodenwand der zweiten Nut (13c) erzeugt wird;
der Außenrand (141) der ersten Nut (102) eine erste Befestigungswand (144) umfasst, die mit der Seitenwand (142) der ersten Nut (102) verbunden ist, und die erste Befestigungswand (144) an der Bodenwand der zweiten Nut (13c) befestigt ist; und
sich der übrige Teil am Außenrand (141) der ersten Nut (102), der nicht die erste Befestigungswand (144) ist, bis zu der ersten Oberfläche (13a) erstreckt, um an der ersten Oberfläche (13a) befestigt zu werden.

9. Batterie (10) nach Anspruch 8, wobei die Befestigungskomponente (13) eine erste Wärmeübertragungsplatte (131) und eine zweite Wärmeübertragungsplatte (132) umfasst, wobei sich die erste Wärmeübertragungsplatte (131) zwischen der ersten Wand (215) und der zweiten Wärmeübertragungsplatte (132) befindet und an der ersten Wand (215) befestigt ist, eine erste Region (131a) der ersten Wärmeübertragungsplatte (131) in Richtung der zweiten Wärmeübertragungsplatte (132) ausgespart ist, um die zweite Nut (13c) auszubilden, die erste Region (131a) mit der zweiten Wärmeübertragungsplatte (132) verbunden ist und das erste Durchgangsloch (101) in der ersten Region (131a) erzeugt wird; und
der Außenrand (141) der ersten Nut (102) ferner eine zweite Befestigungswand (145) und eine Verbindungswand (146) umfasst, wobei die zweite Befestigungswand (145) über die Verbindungswand (146) mit der ersten Befestigungswand (144) verbunden ist, die erste Befestigungswand (144) an der ersten Region (131a) befestigt ist, die zweite Befestigungswand (145) an einer zweiten Region (131b) der ersten Wärmeübertragungsplatte (131) befestigt ist und die zweite Region (131b) konfiguriert ist, um an der ersten Wand (215) befestigt zu werden;
optional, wobei ein Spalt zwischen der Verbindungswand (146) und einer Seitenwand der zweiten Nut (13c) angeordnet ist; oder die Verbindungswand (146) an einer Seitenwand der zweiten Nut (13c) anliegt und diese abdeckt.

10. Batterie (10) nach einem der Ansprüche 1 bis 9, wobei die Isolierkomponente (14) konfiguriert ist, um einen Raum bereitzustellen, der die Betätigung des Druckentlastungsmechanismus (213) ermöglicht, und wobei zwischen der Isolierkomponente (14) und dem Druckentlastungsmechanismus (213) ein Ausweichhohlraum ausgebildet ist.

11. Batterie (10) nach einem der Ansprüche 1 bis 10, wobei die Innenwand (13b) des ersten Durchgangslochs (101) mit einem Isoliermaterial beschichtet ist.

12. Batterie (10) nach einem der Ansprüche 1 bis 11, wobei die Befestigungskomponente (13) eine Wärmemanagementkomponente ist und die Wärmemanagementkomponente konfiguriert ist, um ein Fluid zur Regulierung der Temperatur für die Batteriezelle (20) aufzunehmen.

13. Elektrische Vorrichtung, wobei die Vorrichtung die Batterie (10) nach einem der Ansprüche 1 bis 12 umfasst und die Batterie (10) konfiguriert ist, um elektrische Energie für die elektrische Vorrichtung bereitzustellen.

14. Verfahren zum Herstellen einer Batterie (10), wobei das Verfahren Folgendes umfasst:
Bereitstellen einer Batteriezelle (20), wobei die Batteriezelle (20) einen Druckentlastungsmechanismus (213) umfasst, wobei der Druckentlastungsmechanismus (213) an einer ersten Wand (215) der Batteriezelle (20) angeordnet ist und der Druckentlastungsmechanismus (213) konfiguriert ist, um betätigt zu werden, um einen Innendruck abzulassen, wenn der Innendruck oder eine Innentemperatur der Batteriezelle (20) einen Schwellenwert erreicht;
Bereitstellen einer Befestigungskomponente (13), wobei eine erste Oberfläche (13a) der Befestigungskomponente (13) an der ersten Wand (215) befestigt ist, ein erstes Durchgangsloch (101), das sich entsprechend dem Druckentlastungsmechanismus (213) befindet, in der Befestigungskomponente (13) erzeugt wird, und das erste Durchgangsloch (101) konfiguriert ist, um bei Betätigung des Druckentlastungsmechanismus (213) Emissionen aus der Batteriezelle (20) durch die Befestigungskomponente (13) hindurch zu lassen;
Bereitstellen einer Isolierkomponente (14);
Anordnen mindestens eines Teils der Isolierkomponente (14) derart, dass er an einer Innenwand (13b) des ersten Durchgangslochs (101) anliegt und diese abdeckt, um die Innenwand (13b) des ersten Durchgangslochs (101) dielektrisch zu schützen; und
Erzeugen einer ersten Nut (102) in der Isolierkomponente (14), wobei:
eine Seitenwand (142) der ersten Nut (102) in das erste Durchgangsloch (101) eingebettet ist und ein Außenrand (141) der ersten Nut (102) an der ersten Oberfläche (13a) befestigt ist;
eine Bodenwand (143) der ersten Nut (102) konfiguriert ist, um das erste Durchgangsloch (101) zu blockieren; und
die Bodenwand (143) der ersten Nut (102) konfiguriert ist, um durch die Emissionen aufgebrochen zu werden, wenn der Druckentlastungsmechanismus (213) betätigt wird, um die Emissionen durch die Isolierkomponente (14) hindurch zu lassen.

## Revendications

1. Batterie (10), la batterie (10) comprenant :
une cellule de batterie (20), comprenant un mécanisme de libération de pression (213), le mécanisme de libération de pression (213) étant disposé sur une première paroi (215) de la cellule de batterie (20), et le mécanisme de libération de pression (213) étant conçu pour être actionné de sorte à libérer une pression interne quand la pression interne ou une température interne de la cellule de batterie (20) atteint un seuil ;
un composant de fixation (13), une première surface (13a) du composant de fixation (13) étant fixée à la première paroi (215), un premier trou traversant (101) situé de manière à correspondre au mécanisme de libération de pression (213) étant créé dans le composant de fixation (13), et le premier trou traversant (101) étant conçu pour amener des émissions de la cellule de batterie (20) à traverser le composant de fixation (13) lors de l'actionnement du mécanisme de libération de pression (213) ; et
un composant d'isolation (14), au moins une partie du composant d'isolation (14) venant en butée et couvrant une paroi interne (13b) du premier trou traversant (101) pour protéger de manière diélectrique la paroi interne (13b) du premier trou traversant (101) ;
une première rainure (102) étant créée dans le composant d'isolation (14), une paroi latérale (142) de la première rainure (102) étant intégrée dans le premier trou traversant (101), et une marge externe (141) de la première rainure (102) étant fixée à la première surface (13a) ;
une paroi de fond (143) de la première rainure (102) étant conçue pour bloquer le premier trou traversant (101) ; et
la paroi de fond (143) de la première rainure (102) étant conçue pour être cassée par les émissions quand le mécanisme de libération de pression (213) est actionné, de sorte à laisser les émissions passer à travers le composant d'isolation (14).

2. Batterie (10) selon la revendication 1, dans laquelle un deuxième trou traversant (103) est créé dans une paroi de fond (143) de la première rainure (102), et le deuxième trou traversant (103) est conçu pour amener les émissions de la cellule de batterie (20) à passer à travers le composant d'isolation (14) lors de l'actionnement du mécanisme de libération de pression (213).

3. Batterie (10) selon la revendication 1, dans laquelle une région fragile (104) est disposée sur la paroi de fond (143) de la première rainure (102), et la région fragile (104) est conçue pour être cassée par les émissions quand le mécanisme de libération de pression (213) est actionné, de sorte à laisser les émissions passer à travers le région fragile (104).

4. Batterie (10) selon la revendication 3, dans laquelle la région fragile (104) satisfait au moins l'une des conditions suivantes :
un point de fusion de la région fragile (104) est inférieur à un point de fusion d'une partie restante du composant d'isolation (14) ;
une épaisseur de la région fragile (104) est inférieure à une épaisseur de la partie restante du composant d'isolation (14) ; et
une encoche est créée dans la région fragile (104).

5. Batterie (10) selon l'une quelconque des revendications 1 à 4, dans laquelle
le composant de fixation (13) est conçu pour être fixé à la première paroi (215) par l'intermédiaire d'un liant ; et le composant d'isolation (14) est conçu pour empêcher que le liant soit appliqué entre le composant de fixation (13) et le mécanisme de libération de pression (213) ; éventuellement,
dans laquelle, le mécanisme de libération de pression (213) comprend une région d'actionnement, et le mécanisme de libération de pression (213) est conçu pour former un passage d'échappement dans la région d'actionnement quand la pression interne ou la température interne de la cellule de batterie (20) atteint le seuil, le passage d'échappement étant conçu pour libérer la pression interne ; et
la marge externe (141) de la première rainure (102) est conçue pour entourer au moins la région d'actionnement afin d'empêcher que le liant entre dans la région d'actionnement.

6. Batterie (10) selon la revendication 5, dans laquelle une partie saillante (141a) est disposée sur la marge externe (141) de la première rainure (102), la partie saillante (141a) est conçue pour dépasser de la première surface (13a) et est disposée autour du mécanisme de libération de pression (213), et la partie saillante (141a) est conçue pour empêcher que le liant soit appliqué entre le composant de fixation (13) et le mécanisme de libération de pression (213).

7. Batterie (10) selon la revendication 6, dans laquelle la partie saillante (141a) comprend une structure de bride (141b) formée par pliage de la marge externe (141) de la première rainure (102) ; et/ou
dans laquelle une hauteur maximale de la partie saillante (141a) depuis la première surface (13a) est définie pour être supérieure ou égale à une hauteur prédéfinie sur laquelle le liant doit être appliqué, et la partie saillante est compressée à la même hauteur que le liant lorsque la cellule de batterie (20) est fixée au composant de fixation (13).

8. Batterie (10) selon l'une quelconque des revendications 1 à 7, dans laquelle une deuxième rainure (13c) disposée en regard du mécanisme de libération de pression (213) est créée dans le composant de fixation (13), et le premier trou traversant (101) est créé dans une paroi de fond de la deuxième rainure (13c) ;
la marge externe (141) de la première rainure (102) comprend une première paroi de fixation (144) reliée à la paroi latérale (142) de la première rainure (102), et la première paroi de fixation (144) est fixée à la paroi de fond de la deuxième rainure (13c) ; et
la partie restante autre que la première paroi de fixation (144) sur la marge externe (141) de la première rainure (102) s'étend vers la première surface (13a), de sorte à être fixée à la première surface (13a).

9. Batterie (10) selon la revendication 8, dans laquelle le composant de fixation (13) comprend une première plaque de transfert de chaleur (131) et une deuxième plaque de transfert de chaleur (132), la première plaque de transfert de chaleur (131) est située entre la première paroi (215) et la deuxième plaque de transfert de chaleur (132) et fixée à la première paroi (215), une première région (131a) de la première plaque de transfert de chaleur (131) est en retrait en direction de la deuxième plaque de transfert de chaleur (132) pour former la deuxième rainure (13c), la première région (131a) est reliée à la deuxième plaque de transfert de chaleur (132), et le premier trou traversant (101) est créé dans la première région (131a) ; et
la marge externe (141) de la première rainure (102) comprend en outre une deuxième paroi de fixation (145) et une paroi de raccordement (146), la deuxième paroi de fixation (145) est raccordée à la première paroi de fixation (144) par la paroi de raccordement (146), la première paroi de fixation (144) est fixée à la première région (131a), la deuxième paroi de fixation (145) est fixée à la deuxième région (131b) de la première plaque de transfert de chaleur (131), et la deuxième région (131b) est conçue pour être fixée à la première paroi (215) ;
éventuellement, dans laquelle un dégagement est agencé entre la paroi de raccordement (146) et une paroi latérale de la deuxième rainure (13c) ; ou la paroi de raccordement (146) vient en butée et couvre une paroi latérale de la deuxième rainure (13c).

10. Batterie (10) selon l'une quelconque des revendications 1 à 9, dans laquelle le composant d'isolation (14) est conçu pour fournir un espace qui permet un actionnement du mécanisme de libération de pression (213), et une cavité d'évitement est ménagée entre le composant d'isolation (14) et le mécanisme de libération de pression (213).

11. Batterie (10) selon l'une quelconque des revendications 1 à 10, dans laquelle la paroi interne (13b) du premier trou traversant (101) est revêtue d'un matériau d'isolation.

12. Batterie (10) selon l'une quelconque des revendications 1 à 11, dans laquelle le composant de fixation (13) est un composant de gestion thermique, et le composant de gestion thermique est conçu pour recevoir un fluide destiné à réguler une température pour la cellule de batterie (20).

13. Dispositif électrique, le dispositif électrique comprenant la batterie (10) selon l'une quelconque des revendications 1 à 12, et la batterie (10) étant conçue pour fournir de l'énergie électrique pour le dispositif électrique.

14. Procédé de fabrication d'une batterie (10), le procédé comprenant les étapes suivantes consistant à :
fournir une cellule de batterie (20), la cellule de batterie (20) comprenant un mécanisme de libération de pression (213), le mécanisme de libération de pression (213) étant disposé sur une première paroi (215) de la cellule de batterie (20), et le mécanisme de libération de pression (213) étant conçu pour être actionné de sorte à libérer une pression interne quand la pression interne ou une température interne de la cellule de batterie (20) atteint un seuil ;
fournir un composant de fixation (13), une première surface (13a) du composant de fixation (13) étant fixée à la première paroi (215), un premier trou traversant (101) situé de manière à correspondre au mécanisme de libération de pression (213) étant créé dans le composant de fixation (13), et le premier trou traversant (101) étant conçu pour amener des émissions de la cellule de batterie (20) à traverser le composant de fixation (13) lors de l'actionnement du mécanisme de libération de pression (213) ;
fournir un composant d'isolation (14) ;
amener au moins une partie du composant d'isolation (14) à venir en butée et couvrir une paroi interne (13b) du premier trou traversant (101) pour protéger de manière diélectrique la paroi interne (13b) du premier trou traversant (101) ; et
créer une première rainure (102) dans le composant d'isolation (14), dans lequel :
une paroi latérale (142) de la première rainure (102) est intégrée dans le premier trou traversant (101), et une marge externe (141) de la première rainure (102) est fixée à la première surface (13a) ;
une paroi de fond (143) de la première rainure (102) est conçue pour bloquer le premier trou traversant (101) ; et
la paroi de fond (143) de la première rainure (102) est conçue pour être cassée par les émissions quand le mécanisme de libération de pression (213) est actionné, de sorte à laisser les émissions passer à travers le composant d'isolation (14).
